# EUROPEAN PATENT APPLICATION

(11) **EP 1 473 643 A2**
(43) Date of publication of application: **03.11.2004**
(21) Application number: 04252393.6
(22) Date of filing: 23.04.2004
(51) Int. Cl.: G06F 17/30

(54) **File management method, file management device, annotation information generation method, and annotation information generation device**

(30) Priority: 30.04.2003 JP 2003124674; 30.04.2003 JP 2003124673; 30.05.2003 JP 2003155100; 16.02.2004 JP 2004038265
(71) Applicant: SEIKO EPSON CORPORATION, Shinjuku-ku, Tokyo 163-0811 (JP)
(72) Inventor: Nagasaka, Fumio, Suwa-shi Nagano-ken, 392-8502 (JP)
(74) Representative: Sturt, Clifford Mark

(57) **Abstract**

An annotation database section 232 of a hard disk drive 208 stores annotation data corresponding to each file separately from the file. The annotation data include attribute information, history information, and location information regarding each file. In response to input of desired conditions of an object file to be extracted, a data management module 226 reads out annotation data that meet the input conditions. An annotation information analyzer module 224 analyzes the syntax of the annotation data to gain location information. A data management module 226 obtains the object file from a location identified by the location information. Even when the object file is located at a remote place, for example, in a server on a network, this arrangement enables the object file to be readily extracted. The object file may be an image file or any other file.

## Description

### BACKGROUND OF THE INVENTION

### 1. Field of the Invention

The present invention relates to a technique of extracting a desired file from a large number of files and of displaying the history of a desired file. The invention also pertains to a technique of generating annotation information related to an image file.

### 2. Description of the Related Art

With recent advancement in computer technology and network technology, numerous files including image files, audio files, document files, and programs files are present on computers and networks.

One important issue is thus enable the user to find a desired file among such uncountable files.

One proposed system for retrieving a file is disclosed in Japanese Patent Open-Laid Gazette No. 11-234605.

This system is directed to retrieval of image files of, for example, photographs. An image display device with a magneto-optic disc extracts a desired image file from a large number of image files stored in the magneto-optic disc, based on a combination of shooting conditions at the time of shooting the photograph and history information on a record of operations with regard to the image file.

In the prior art technique, each image file is integrated with shooting conditions and history information on the image file. For example, when the image file is moved from the magneto-optic disc of the image display device to a remote place like a server on a network, the integrated shooting conditions and history information are moved together with the image file. The image display device is thus unable to extract the image file any longer.

Another problem of the prior art technique is restriction of the object file to only image files. It is accordingly impossible to extract other types of files including audio files, document files, and program files.

The information provided for each image file by the prior art technique includes only the shooting conditions recorded at the time of shooting and history information with regard to the image file. The prior art technique thus does not enable a desired image file to be extracted with description of an image expressed by the image file as the key.

Such information on the description of the image may be provided as the user's entry of character strings. This method, however, increases the burden on the user.

### SUMMARY OF THE INVENTION

The object of the invention is thus to provide a technique of enabling an object file, which may be an image file or another type of file and may be even located at a remote place, for example, in a server on a network, to be readily extracted. The object of the invention is also to provide a technique of providing information on description of an image expressed by an image file without imposing additional load on the user.

In order to attain at least part of the above and other related objects, the invention is directed to a first file management method that manages multiple files. The first file management method includes the steps of (a) providing annotation information corresponding to each file separately from the file with respect to each of the multiple files and/or a folder for storing the multiple files, where the annotation information includes attribute information representing an attribute attached to the file, history information representing a record of operations regarding the file, and location information representing a location of the file; and (b) in response to specification of a condition for a file to be extracted, extracting an object file that meets the specified condition, based on the annotation information.

The first file management method of the invention generates annotation information corresponding to a file separately from the file. The annotation information thus does not depend upon the file format and is provided for any of various types of files including image files, audio files, document files, and program files. Even when a file is moved to a remote place like a server on a network, the annotation information is not necessarily moved with the file. The annotation information includes location information representing the location of the file. Simple rewriting of the location information with the move of the file ensures easy pursuit of the location of the file.

The first file management method of the invention enables an object file, which may be an image file or another type of file and may be located even at a remote place, for example, in a server on a network, to be readily extracted, based on the annotation information corresponding to the object file.

In the specification here, the terminology 'extraction of a file' includes retrieval of a file under preset conditions and screening of a file under preset conditions. The attribute information includes various pieces of information regarding each file, other than the history information and the location information.

In one preferable embodiment, the first file management method of the invention further includes the step of: (c) displaying a record of operations regarding the extracted object file, based on the history information included in the annotation information corresponding to the object file.

This additional step displays the record of operations with regard to the extracted object file and thus ensures easy tracking of the history of the object file.

In another preferable embodiment, the first file management method of the invention further includes the step of: (c) obtaining the object file, based on the location information included in the annotation information corresponding to the object file.

This additional step actually obtains the extracted object file for a further operation on the obtained object file.

The invention is also directed to a second file management method that manages multiple files. The second file management method includes the steps of: (a) providing annotation information corresponding to each file separately from the file with respect to each of the multiple files and/or a folder for storing the multiple files, where the annotation information includes attribute information representing an attribute attached to the file, history information representing a record of operations regarding the file, and location information representing a location of the file; and (b) in response to specification of a file, displaying information on the specified file, based on the annotation information corresponding to the specified file.

The second file management method of the invention displays various pieces of information regarding the specified file, based on the annotation information including the attribute information, the history information, and the location information. This readily informs the user of the characteristics of the file.

In the file management method of the invention, it is preferable that the annotation information is managed in the form of a database.

Management of the annotation information in the form of a database enables annotation information that meets the specified condition to be readily retrieved in a short time.

In the file management method of the invention, it is preferable that the annotation information is described in XML or extensible Markup Language.

The XML has description distinguished from markup and thus advantageously facilitates extraction of an arbitrary field. Describing the annotation data in XML enhances the convenience of the annotation data for the secondary use by the computer.

The invention is directed to a first annotation information generation method that generates annotation information corresponding to an image file separately from the image file. The first annotation information generation method includes the steps of: (a) analyzing the image file to extract a characteristic of an image expressed by the image file; (b) extracting a label relating to the characteristic, based on at least the extracted characteristic; and (c) generating the annotation information including the extracted label.

The first annotation information generation method of the invention analyzes an image file to extract a characteristic of an image expressed by the image file, extracts a corresponding label based on at least the extracted characteristic, and generates annotation information including the extracted label.

For example, the label may be an image description label and be related to the characteristic of the image. The first annotation information generation method of the invention then automatically obtains description of the image from the image file and does not require the user to enter such information by input of character strings. This arrangement thus desirably relieves the load of the user. The annotation information generated includes information on the description of the image. The use of such annotation information enables a desired image file to be extracted with the description of the image as the key.

The invention is further directed to a second annotation information generation method that generates annotation information corresponding to an image file separately from the image file. The second annotation information generation method includes the steps of: (a) displaying multiple icons corresponding to multiple labels set in advance and an image expressed by the image file on a window; (b) extracting a label corresponding to a selected icon among the multiple displayed icons, in response to an instruction of relating the selected icon to the image; and (c) generating the annotation information including the extracted label.

The second annotation information generation method of the invention displays icons and an image on the window, extracts a label corresponding to a selected icon in response to an instruction of relating the selected icon to the image, and generates annotation information including the extracted label.

The second annotation information generation method of the invention enables a label corresponding to a selected icon to be readily extracted by simple association of the selected icon with the image. This arrangement does not require the user to enter the label by input of character strings and significantly relieves the burden on the user.

The invention is not restricted to the file management methods or the annotation information generation methods discussed above. The technique of the invention is also actualized by file management devices and annotation information generation devices corresponding to the file management methods and the annotation information generation methods discussed above, computer programs for constructing these methods and devices, recording media in which such computer programs are recorded, and data signals that include such computer programs and are embodied in carrier waves.

These and other objects, features, aspects, and advantages of the present invention will become more apparent from the following detailed description of the preferred embodiments with the accompanying drawings.

### BRIEF DESCRIPTION OF THE DRAWINGS

Fig. 1 illustrates the appearance of a file management system including file management devices in a first embodiment of the invention;
Fig. 2 is a block diagram showing the configuration of the stationary file management device shown in Fig. 1;
Fig. 3 is a block diagram showing the configuration of the portable file management device shown in Fig. 1;
Fig. 4 is a flowchart showing a check-in routine executed by the file management device in the first embodiment;
Fig. 5 shows the contents of control items in annotation data;
Fig. 6 is a flowchart showing a file extraction routine in a file management method of the first embodiment;
Fig. 7 shows a change in display of a window in the file extraction process of Fig. 6 executed by the file management device of the first embodiment;
Fig. 8 shows the change in display of the window in the file extraction process of Fig. 6;
Fig. 9 shows the change in display of the window in the file extraction process of Fig. 6;
Fig. 10 shows the change in display of the window in the file extraction process of Fig. 6;
Fig. 11 shows the change in display of the window in the file extraction process of Fig. 6;
Fig. 12 is a flowchart showing an information display routine executed by the file management device in a second embodiment of the invention;
Fig. 13 shows the contents of annotation data;
Fig. 14 shows the tree structure of the annotation data of Fig. 13 as the result of syntax analysis;
Fig. 15 shows an information display window, based on the annotation data of Fig. 13;
Fig. 16 is a block diagram illustrating the configuration of a file management device that is capable of executing an annotation information generation method in a third embodiment of the invention;
Fig. 17 is a flowchart showing a check-in routine including the annotation information generation method in the third embodiment;
Fig. 18 shows the contents of control items in annotation data;
Fig. 19 is a flowchart showing a processing routine to extract the description of the image from an image file in the third embodiment;
Fig. 20 shows a simulating program to determine the belongingness of the color of a pixel in a specific color range and to record the position of the pixel;
Fig. 21 shows a positional distribution of pixels in an image belonging to a certain color range and the position of the center of gravity with regard to the pixels in the image;
Fig. 22 is a flowchart showing a file extraction routine to extract an image file based on annotation data in the third embodiment;
Fig. 23 shows a change in display of a window on the monitor in the file extraction process of Fig. 22;
Fig. 24 shows the change in display of the window on the monitor in the file extraction process of Fig. 22;
Fig. 25 shows the change in display of the window on the monitor in the file extraction process of Fig. 22;
Fig. 26 is a flowchart showing a user control item input routine in an annotation information generation method in a fourth embodiment of the invention;
Figs. 27(a) and 27(b) show a display on the monitor in the user control item input process of Fig. 26; and
Fig. 28 shows an example of command predicates described in XML for function calls between devices.

### DESCRIPTION OF THE PREFERRED EMBODIMENTS

Some modes of carrying out the invention are discussed below as preferred embodiments in the following sequence:
(1) First Embodiment
   1-A. Configuration of Device
   1-B. Details of Processing
      1-B-1. Generation of Annotation Data
      1-B-2. Addition of Annotations
      1-B-3. Move of File
      1-B-4. Synchronization
      1-B-5. Extraction of File
      1-B-6. Check-Out of File
(2) Second Embodiment
(3) Third Embodiment
   3-A. Configuration of Device
   3-B. Details of Processing
      3-B-1. Generation of Annotation Data
      3-B-2. Extraction of File
(4) Fourth Embodiment
(5) Modification

### (1) First Embodiment

### 1-A. Configuration of Device

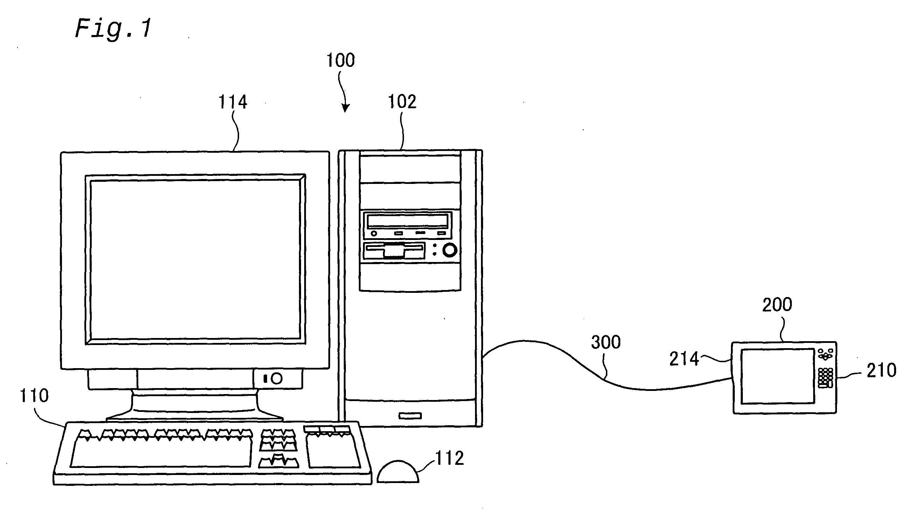

Fig. 1 illustrates the appearance of a file management system including file management devices in a first embodiment of the invention. The file management system of Fig. 1 has a stationary file management device 100 and a portable file management device 200 in the first embodiment of the invention. Each of these two file management devices 100 and 200 is capable of independently managing multiple files. As shown in Fig. 1, these two file management devices 100 and 200 are connectable via a cable 300 to attain transmission of information and files therebetween.

The stationary file management device 100 is constructed as a personal computer and includes a computer main body 102, a keyboard 110 and a pointing device 112 as input devices connecting with the computer main body 102, and a monitor 114 as an output device connecting with the computer main body 102. The portable file management device 200 is constructed as a personal digital assistant and mainly includes an operation unit 210 with multiple entry keys and a liquid crystal display 214 as outer components and a hard disk drive (discussed later) as an input component. The stationary file management device 100 is located, for example, on the top of a user's desk, while the portable file management device 200 is generally carried by the user.

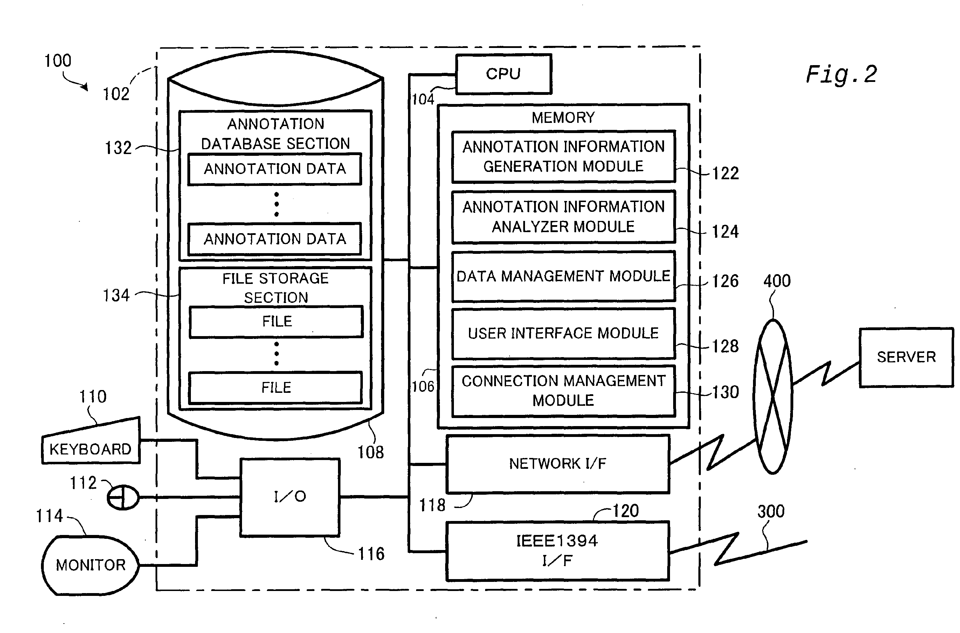

Fig. 2 is a block diagram showing the configuration of the stationary file management device 100 shown in Fig. 1. In the stationary file management device 100 of the embodiment, as shown in Fig. 2, the computer main body 102 has a CPU 104 that executes various series of processing and controls according to respective programs, a memory 106 that stores diverse programs and data obtained in the middle of processing, a hard disk drive 108 that stores diverse programs and various data, an I/O circuit 116 that transmits data to and from the input devices and the output device, a network interface (I/F) circuit 118 that transmits data to and from another device, such as a server, via a network 400, and an IEEE1394 I/F circuit 120 that transmits data to and from, for example, the portable file management device 200 via the cable 300 according to the IEEE1394 standard. These constituents are mutually connected via a bus.

The computer main body 102 also has a CD-ROM drive and a PC card I/F circuit (not shown). The computer main body 102 may have a USB I/F circuit, a Bluetooth I/F circuit, an SCSI I/F circuit, a parallel I/F circuit, a serial I/F circuit, and an IEEE802.11 I/F circuit, in addition to or in place of the I/F circuits 118 and 120.

The CPU 104 executes a file management program among the diverse programs stored in the memory 106 to function as an annotation information generation module 122, an annotation information analyzer module 124, a data management module 126, a user interface module 128, and a connection management module 130 (discussed later). The file management program is constructed as an application program, although part of the file management program may be attained by the operating system software.

In this embodiment, the file management program is provided in a recorded form in a CD-ROM and is read by the CD-ROM drive (not shown) to be taken into the computer main body 102. The program is transferred to the hard disk drive 108 and further to the memory 106 at start-up. This embodiment uses the CD-ROM as a 'recording medium' for recording programs in a computer readable manner. There are diversity of other computer-readable recording media available for the same purpose: flexible disks, magneto-optic discs, DVDs, memory cards, IC cards, ROM cartridges, punched cards, prints with barcodes and other codes printed thereon, and internal storage devices (memories like RAM and ROM) and external storage devices of the computer. The file management program may otherwise be supplied from a program server (not shown) as a program supplier via the network 400 to be taken into the computer main body 102, instead of being provided in a recorded form in such a recording medium.

An annotation database section 132 including a mass volume of annotation data (discussed later) and a file storage section 134 storing a large number of files are constructed in the hard disk drive 108. The files storable in the file storage section 134 include image files of still pictures and moving pictures like JPEG (Joint Photographic Experts Group), GIF (Graphics Interchange Format), and MPEG (Moving Pictures Experts Group) files, audio files like MP3 (MPEG1 Audio Layer 3) and MIDI (musical Instrument Digital Interface) files, document files like text, HTML (Hyper Text Markup Language), word processing, e-mail, and spreadsheet files, and program files.

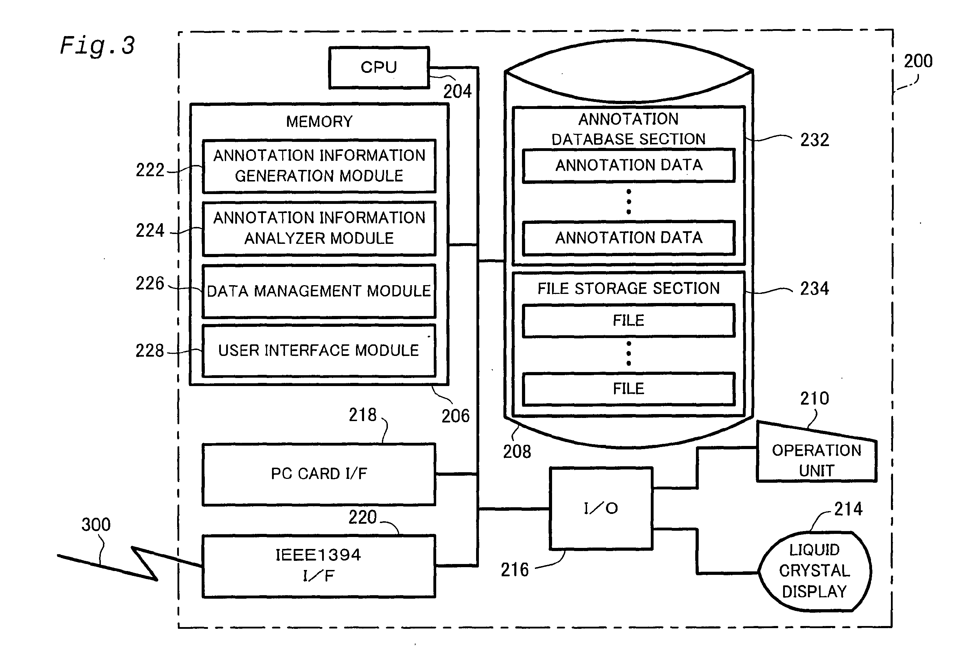

Fig. 3 is a block diagram showing the configuration of the portable file management device 200 shown in Fig. 1. As shown in Fig. 3, the portable file management device 200 of this embodiment includes a CPU 204 that executes various series of processing and controls according to respective programs, a memory 206 that stores diverse programs and data obtained in the middle of processing, a hard disk drive 208 that stores diverse programs and various data, the operation unit 210, the liquid crystal display 214, an I/O circuit 216 that transmits data to and from the operation unit 210 and the liquid crystal display 214, a PC card I/F circuit 218 that transmits data to and from a PC card (not shown) inserted in the portable file management device 200, and an IEEE 1394 I/F circuit 220 that transmits data to and from, for example, the stationary file management device 100 via the cable 300 according to the IEEE1394 standard. These constituents are mutually connected via a bus.

Like the stationary file management device 100 shown in Fig. 2, the portable file management device 200 may have diverse I/F circuits, in addition to or in place of the IEEE1394 I/F circuit 220.

Like the stationary file management device 100 shown in Fig. 2, the CPU 204 executes a file management program among the diverse programs stored in the memory 206 to function as an annotation information generation module 222, an annotation information analyzer module 224, a data management module 226, and a user interface module 228 (discussed later). The file management program is constructed as an application program, although part of the file management program may be attained by the operating system software.

In this embodiment, the file management program is provided in a recorded form in a ROM area of the memory 206. The file management program may be provided in a recorded form in a PC card to be taken into the portable file management device 200 via the PC card I/F circuit 218. The file management program may otherwise be supplied from the stationary file management device 100 to be taken into the portable file management device 200 via the cable 300, instead of being provided in a recorded form in such a recording medium.

Like the stationary file management device 100 shown in Fig. 2, an annotation database section 232 including a mass volume of annotation data (discussed later) and a file storage section 234 storing a large number of files are constructed in the hard disk drive 208. The file system adopted in the hard disk drive 208 is identical with the file system (for example, FAT32) adopted in the hard disk drive 108 of the stationary file management device 100.

The operating system executed in the stationary file management device 100 may be identical with or different from the operating system executed in the portable file management device 200.

### 1-B. Details of Processing

The following describes various series of processing executed by the file management device of the embodiment. A file is subjected to a check-in process to be included in a control object of the file management device of the embodiment. The file is subjected to a check-out process, on the other hand, to be excluded from the control object of the file management device of the embodiment.

### 1-B-1. Generation of Annotation Data

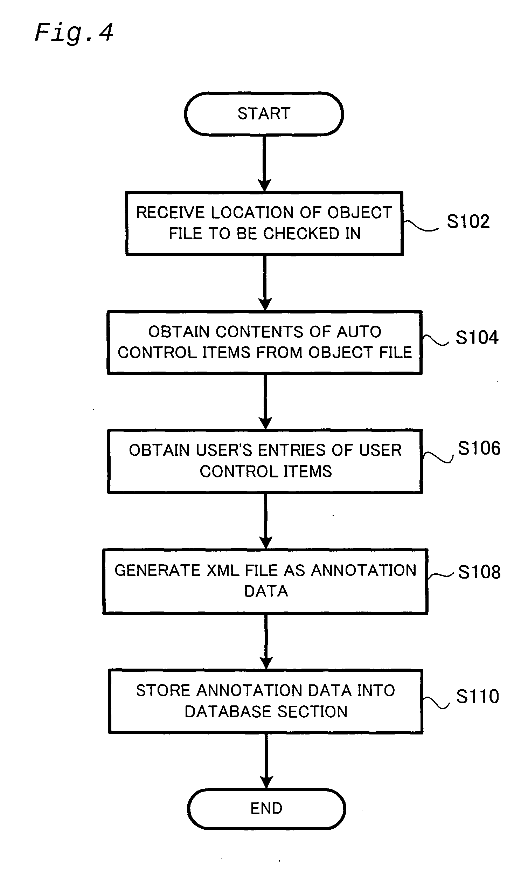

The check-in process is described first. Fig. 4 is a flowchart showing a check-in routine executed by the file management device of the embodiment. This check-in routine may be carried out by the stationary file management device 100 shown in Fig. 2 and by the portable file management device 200 shown in Fig. 3. The description here regards execution of the check-in routine by the stationary file management device 100 shown in Fig. 2.

When the CPU 104 executes the file management program, the user interface module 128 opens a file management window on the monitor 114. In this example, the user checks in a selected file among a large number of files stored in the file storage section 134 of the hard disk drive 108. The user manipulates the pointing device 112 and drags and drops an icon corresponding to the selected file onto the file management window displayed on the monitor 114. The user interface module 128 detects the drag-and-drop and notifies the annotation information generation module 112 and the data management module 126 of a file name given to the selected file.

As an example, it is here assumed that the file to be checked in is an image file.

The data management module 126 reads an object image file to be checked in from the file storage section 134 of the hard disk drive 108, based on the notified file name, samples the image file, and generates a contracted image of about 120x 120 pixels. The generated contracted image is written into the hard disk drive 108.

The annotation information generation module 122 starts generation of annotation data as annotation information on the object image file, in response to reception of the file name from the user interface module 128. The annotation data include attribute information attached to an object file, history information of operations with regard to the object file, and location information representing the location of the object file and are generated as an XML (eXtensible Markup Language) file.

The location information is expressed by an extension link of XML. The attribute information and the history information are classified into auto control items that are automatically gained from the object file and user control items that require the user's entries.

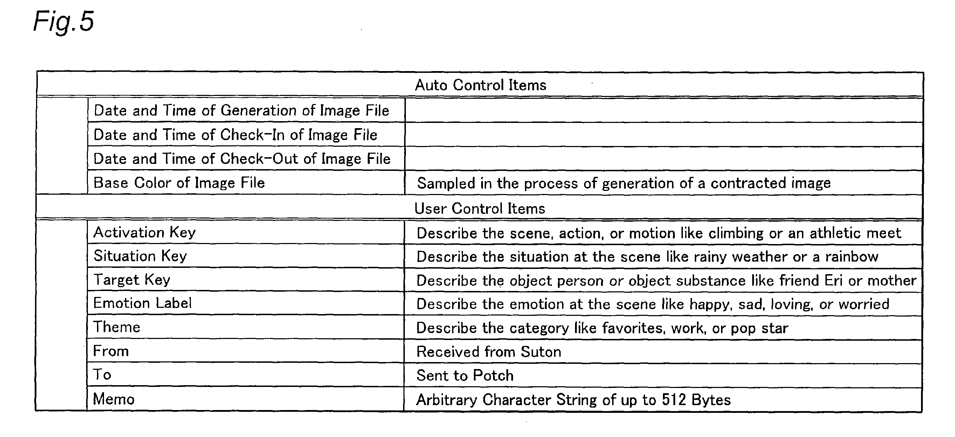

Fig. 5 shows the contents of control items in annotation data. The auto control items include the date and the time of generation of an image file, the date and the time of check-in and the date and the time of check-out of the image file, and a base color of an image in the image file. The base color is detected when the data management module 126 samples the image file and generates the contracted image.

The user control items include an 'Activation' key representing a scene, action, or motion in the image, a 'Situation' key representing situation at the scene, a 'Target' key representing the name of an object person or an object substance in the image, an 'Emotion' label representing sentiment at the scene, 'Theme' representing a category of the image, 'From' representing a transfer source of the image file, 'To' representing a transfer destination of the image file, and 'Memo' freely describable by the user. The 'Memo' includes description of arbitrary character strings of up to 512 bytes.

The date and the time of generation of the image file, the date and the time of check-in and the date and the time of check-out of the image file, 'From', and 'To' are mainly used as the history information, while the other control items are mainly used as the attribute information.

With reference to the flowchart of Fig. 4, in order to generate such annotation data, the annotation information generation module 122 first makes an inquiry to the data management module 126 about the location of the object image file to be checked in, based on the notified file name, and receives the result of the inquiry as location information from the data management module 126 (step S102).

When the object image file read out by the data management module 126 is a JPEG file of, for example, a photograph, the annotation information generation module 122 obtains the date and time of shooting the photograph from Exif (Exchangeable Image File Format) data included in the JPEG file to set the 'date and time of generation of the image file' included in the auto control items shown in Fig. 5. The annotation information generation module 122 also obtains the date and time of check-in to set the 'date and time of check-in of the image file', and obtains the base color of the image, which is detected in the process of generating the contracted image, from the data management module 126 to set the 'base color of the image file' (step S104).

The user interface module 128 opens a user control items input window to ask the user to enter the user control items on the file management window displayed on the monitor 114. The user manipulates the keyboard 110 and the pointing device 112 to make desired entries of the user control items. The user interface module 128 then transfers the entries to the annotation information generation module 122. The annotation information generation module 122 sets the received entries to the corresponding user control items (step S106).

The user may directly input characters to enter the user control items. With regard to each of the user control items other than 'Memo', multiple character strings as possible options may be displayed in a pulldown menu. The user selects a desired option in the pulldown menu to set the contents of each user control item. The user control items entered in the past cycles of the check-in process are occasionally accumulated as item data in the hard disk drive 108. The accumulated item data are read and are displayed as possible options in the pulldown menu.

In this manner, the annotation information generation module 122 obtains the attribute information and the history information as the respective auto control items and user control items.

The annotation information generation module 122 then generates an XML file including the attribute information, the history information, and the location information thus obtained as annotation data (step S108). The location information is described as an URL (Uniform Resource Identifier) of the file by the extension link of XML. The location of the file may be expressed as an absolute file path or as a relative file path. Information on link to the previously generated contracted image is also described as the location information.

The procedure of this embodiment adopts XML for the means of description and RDF (Resource Description Framework) for the technique of description to generate annotation data. The XML file has description distinguished from markup and thus advantageously facilitates extraction of an arbitrary field. Describing the annotation data in XML enhances the convenience of the annotation data for the secondary use by the computer.

The annotation information generation module 122 sends the generated annotation data to the data management module 126. The data management module 126 stores the received annotation data into the annotation database section 132 of the hard disk drive 108 (step S110). The check-in routine is then terminated.

In the example described above, the object file to be checked in is an image file. The check-in process discussed above is, however, not restricted to the image file but is also applicable to any other object file, for example, an audio file, a document file, or a program file, to generate corresponding annotation data and implement a check-in of the object file. The technique of this embodiment generates annotation data separately from a file. The annotation data accordingly do not depend upon the file format and are thus applicable to various types of files.

The above description regards execution of the check-in process by the stationary file management device 100. The portable file management device 200 may execute a similar check-in process with regard to a file stored in the file storage section 234 of the hard disk drive 208 in the portable file management device 200 or a file stored in a PC memory card inserted in the portable file management device 200.

In the check-in process executed by the portable file management device 200, no problem arises when the operation unit 210 is designed to be available for entry of characters. In the case of unavailability, however, the user can not directly input the characters to enter the user control items. As described later, however, when the portable file management device 200 is connected to the stationary file management device 100, the item data accumulated in the hard disk drive 108 of the stationary file management device 100 are automatically transferred to the portable file management device 200. The portable file management device 200 can thus utilize the item data stored in the stationary file management device 100 to display multiple character strings as possible options in a pulldown menu with regard to each of the user control items. The user selects a desired option in the pulldown menu to enter the contents of each user control item.

The above example describes the check-in process with regard to a file stored in the file storage section 134 of the hard disk drive 108. The check-in process described above is also executable with regard to a file stored in another device, such as a digital camera, a scanner, a cell phone, or a game machine, connecting with the stationary file management device 100 or the portable file management device 200 via the IEEE1394 I/F circuit 120 or the IEEE 1394 I/F circuit 220, in another device, such as a server, on the network 400 connecting with the portable file management device 200 via a PC network card inserted into the portable file management device 200, or in another device on the network 400 connecting with the stationary file management device 100 via the network I/F circuit 118 as shown in Fig. 2. The file stored in such another device is, however, subjected to transfer, alteration, change, modification, or deletion, independently of the file management by the file management device of the embodiment. Namely there is a fair possibility of failing in pursuit of the future record of the checked-in file. It is accordingly desirable to download the file from another device into the file management device, prior to the check-in.

### 1-B-2. Addition of Annotations

The following describes a series of processing to transfer a checked-in file by e-mail or write the checked-in file into a medium. In the configuration of this embodiment, this series of processing is executed by the stationary file management device 100 shown in Fig. 2.

For example, a user A as a sender attaches a desired file to an e-mail and sends the e-mail with the attached file to a receiver B. The user A creates an e-mail to the receiver B on an e-mail creation window of a mail software program and manipulates the pointing device 112 to drag and drop an icon corresponding to an object file, which is to be attached to the e-mail and is selected among the files stored in the file storage section 134 of the hard disk drive 108, from the file management window onto the e-mail creation window. The mail software program then causes an event. In the case where the event-causing mail software program is a registered application program, the user interface module 128 detects the event, gains a process ID of the detected event, and identifies the mail software program as the registered application program based on the process ID.

The user A gives an instruction of sending the e-mail to the mail software program. The user interface module 128 then gains access to a mail file generated by the mail software program and reads the address (that is, 'to') in the mail file.

The data management module 126 gains access to the annotation database section 132 of the hard disk drive 108 and reads annotation data corresponding to the object file, which is to be attached to the e-mail, from the annotation database section 132. The annotation information analyzer module 124 analyzes the XML syntax of the annotation data and adds description on transfer of the file with the e-mail to the receiver B as well as the date and time of the transfer as new history information to the annotation data, based on the information obtained by the user interface module 128.

The annotation information generation module 122 then generates updated annotation data with addition of the new history information and sends the updated annotation data to the data management module 126. The data management module 126 stores the updated annotation data into the annotation database section 132 of the hard disk drive 108.

The annotation data corresponding to the file accordingly include description on transfer of the file with the e-mail to the receiver B as additional history information.

If the receiver B uses the file management device shown in Fig. 2, the receiver B receives the e-mail and checks in the file attached to the received e-mail. Annotation data are then generated corresponding to the checked-in file. The generated annotation data include description on reception of the file with the e-mail from the sender A as well as the date and the time of the reception as history information.

As another example, the user writes a desired file into a CD. The user activates a CD writer software program and manipulates the pointing device 112 to drag and drop an icon corresponding to an object file, which is to be written into a CD and is selected among the files stored in the file storage section 134 of the hard disk drive 108, from the file management window onto a CD creation window of the CD writer software program. The CD writer software program then causes an event. In the case where the event-causing CD writer software program is a registered application program, the user interface module 128 detects the event, gains a process ID of the detected event, and identifies the CD writer software program as the registered application program based on the process ID.

As in the case of transfer of the file with the e-mail, the data management module 126 gains access to the annotation database section 132 of the hard disk drive 108 and reads annotation data corresponding to the object file, which is to be written in a CD, from the annotation database section 132. The annotation information analyzer module 124 analyzes the XML syntax of the annotation data and adds description on writing of the file into a CD as well as the date and time of the writing as new history information to the annotation data, based on the information obtained by the user interface module 128. The subsequent processing is identical with the processing in the case of transfer of the file with the e-mail and is thus not specifically mentioned here.

The annotation data corresponding to the file accordingly include description on writing of the file into a CD as additional history information.

The above description regards the annotation addition process executed by the stationary file management device 100. The annotation addition process is similarly executable by the portable file management device 200 that has the mail transmission function or by the portable file management device 200 when a CD-ROM drive is connected to the portable file management device 200 via the IEEE 1394 I/F circuit 220 and the CD writer software program is installed in the portable file management device 200.

### 1-B-3. Move of File

The following describes a series of processing to move the checked-in file to another device on the network 400. In the configuration of this embodiment, this series of processing is executed by the stationary file management device 100 shown in Fig. 2.

For example, the user moves a desired file stored in the file storage section 134 of the hard disk drive 108 to a server located on the network 400. The user manipulates the pointing device 112 and drags and drops an icon corresponding to an object file, which is to be moved, onto an icon corresponding to a desired folder in the server as a moving destination on the file management window. The user interface module 128 detects the drag and drop and notifies the data management module 126 and the annotation information analyzer module 124 of the name of the object file and the moving destination.

The data management module 126 reads the object file, which is to be moved, from the file storage section 134 of the hard disk drive 108 based on the notified information and moves the object file to the desired folder in the server as the moving destination via the network I/F circuit 118 and the network 400.

The data management module 126 gains access to the annotation database module 132 and reads out annotation data corresponding to the object file, which is to be moved. The annotation information analyzer module 124 analyzes the XML syntax of the annotation data and rewrites the location information in the annotation data, based on the information notified by the user interface module 128. The URI of the object file described as the extension link is accordingly changed from the file storage section 134 to the desired folder in the server.

The annotation information generation module 122 then generates updated annotation data with the rewritten location information and sends the updated annotation data to the data management module 126. The data management module 126 stores the updated annotation data into the annotation database section 132 of the hard disk drive 108.

As described above, the technique of this embodiment generates a file separately from annotation data corresponding to the file. When a file is to be moved to a remote plate, for example, to a server on the network, it is only required to rewrite the location information in the corresponding annotation data. Namely there is no necessity of moving the annotation data together with the file.

The above description regards the file moving process executed by the stationary file management device 100. The file moving process is similarly executable by the portable file management device 200 to move a file to another device like a server on the network 400, when the portable file management device 200 is connected to the network 400 via a PC network card inserted in the portable file management device 200.

### 1-B-4. Synchronization

The following describes a series of processing to synchronize the checked-in file between the stationary file management device 100 and the portable file management device 200.

The user connects the portable file management device 200 of Fig. 3 to the stationary file management device 100 of Fig. 2 via the cable 300 as shown in Fig. 1. The connection management module 130 in the stationary file management device 100 detects the connection via the IEEE 1394 I/F circuit 120 and recognizes the portable file management device 200 as a storage device. As mentioned previously, the file system in the hard disk drive 208 of the portable file management device 200 is identical with the file system in the hard disk drive 108 of the stationary file management device 100. The stationary file management device 100 is thus allowed to access the hard disk drive 208 of the portable file management device 200.

The connection management module 130 compares the storage contents in the annotation database section 132 of the stationary file management device 100 with the storage contents in the annotation database section 232 of the portable file management device 200. When both the storage contents are different from each other, the latter storage contents are updated to be identical with the former storage contents. Similarly the connection management module 130 compares the storage contents in the file storage section 134 of the stationary file management device 100 with the storage contents in the file storage section 234 of the portable file management device 200. When both the storage contents are different from each other, the latter storage contents are updated to be identical with the former storage contents. In this manner, the connection management module 130 functions to synchronize the files and the annotation data between the stationary file management device 100 and the portable file management device 200.

As an example, it is assumed that the portable file management device 200 has no checked-in file. Neither the annotation database section 232 nor the file storage section 234 of the hard disk drive 208 accordingly has any annotation data or any file. In this case, when the portable file management device 200 is connected with the stationary file management device 100, the synchronization discussed above causes all the annotation data stored in the annotation database section 132 of the hard disk drive 108 in the stationary file management device 100 to be transferred to and written into the annotation database section 232 in the portable file management device 200. Similarly all the files stored in the file storage section 134 of the hard disk drive 108 in the stationary file management device 100 are transferred to and written into the file storage section 234 in the portable file management device 200. Namely the storage contents of the annotation database section 132 and the file storage section 134 are duplicated in the annotation database section 232 and the file storage section 234. The contracted images and the item data stored in the hard disk drive 108 of the stationary file management device 100 are, together with the annotation data and the files, transferred to and written into the hard disk drive 208 of the portable file management device 200.

As another example, it is assumed that the portable file management device 200 has some checked-in files. The annotation database section 232 and the file storage section 234 of the hard disk drive 208 accordingly have some annotation data and some files. In this case, the synchronization discussed above causes specific part of the annotation data that are stored in the annotation database section 132 of the stationary file management device 100 but are not stored in the annotation database section 232 of the portable file management device 200 or specific part of the annotation data that are stored in the annotation database section 232 but are different from those stored in the annotation database section 132, to be transferred to and written into the annotation database section 232 in the portable file management device 200. Similarly specific part of the files that are stored in the file storage section 134 of the stationary file management device 100 but are not stored in the file storage section 234 of the portable file management device 200 or specific part of the files that are stored in the file storage section 234 but are different from those stored in the file storage section 134, are transferred to and written into the file storage section 234 in the portable file management device 200.

In the above description, the connection management module 130 compares the storage contents of the annotation database section 132 and the file storage section 134 in the stationary file management device 100 with the storage contents of the annotation database section 232 and the file storage section 234 in the portable file management device 200. When the result of the comparison shows the difference between the storage contents, priority is given to the former storage contents (that is, the storage contents in the stationary file management device 100). The latter storage contents are thus rewritten to be identical with the former storage contents. One possible modification may give priority to the latter storage contents (that is, the storage contents in the portable file management device 200) and rewrite the former storage contents to be identical with the latter storage contents. Another possible modification may specify the priority with regard to each annotation data or each file and update the storage contents of the respective annotation data and the respective files to the latest.

On completion of the synchronization of the annotation data and the files by the connection management module 130, the user interface module 128 displays a message representing completion of synchronization on the monitor 114. When the user disconnects the portable file management device 200 from the stationary file management device 100, the portable file management device 200, which has been functioned as the storage device during the connection, starts functioning as an independent file management device.

The synchronization discussed above enables the stationary file management device 100 and the portable file management device 200 to have the identical storage contents of the files and the annotation data.

The above description regards the synchronization of both the files and the annotation data. One possible modification may synchronize only the annotation data, while not synchronizing files.

### 1-B-5. Extraction of File

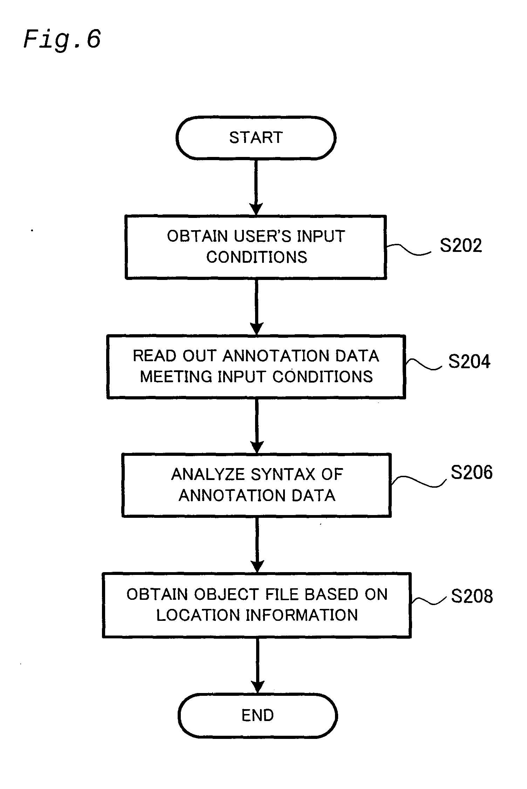

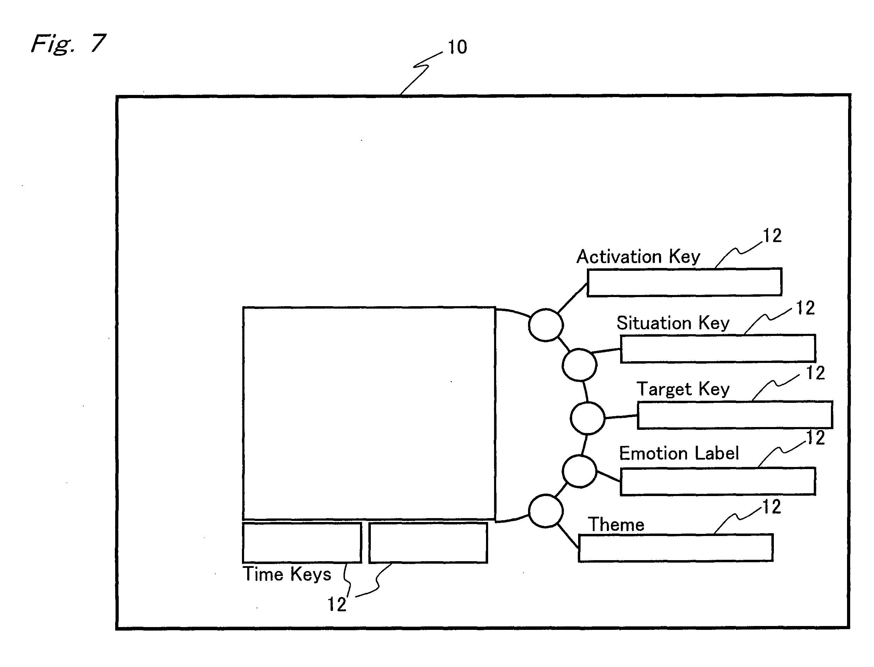

The following describes a process of extracting a file that meets desired conditions, among a large number of checked-in files. Extraction of an object image file is discussed here as an example. Fig. 6 is a flowchart showing a file extraction routine executed in the file management device of the embodiment. Figs. 7 through 11 show a change in display of a window in the file extraction process of Fig. 6 executed by the file management device of the embodiment. The file extraction routine is executable by the stationary file management device 100 shown in Fig. 2 or by the portable file management device 200 shown in Fig. 3. The description here regards the flow executed by the portable file management device 200 shown in Fig. 3.

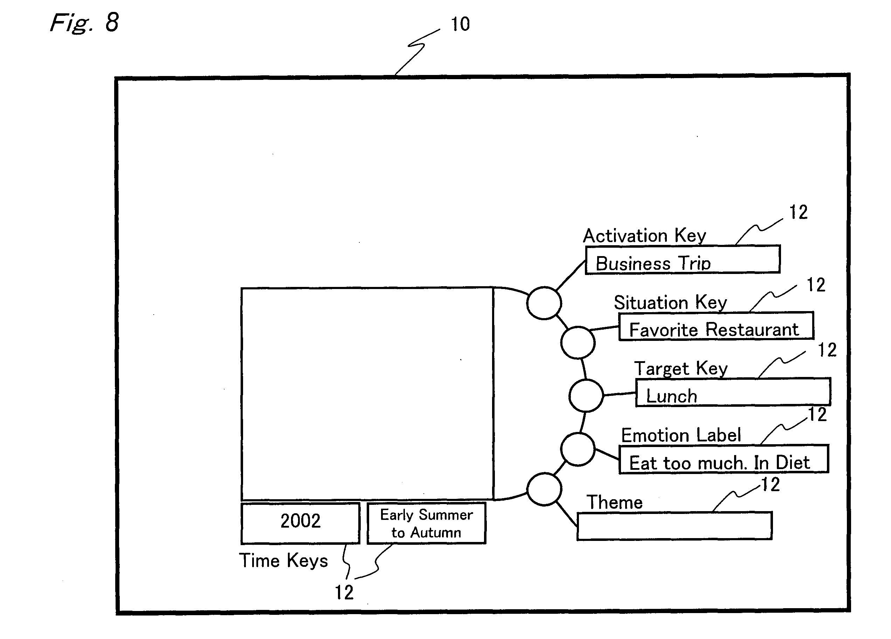

When the CPU 204 executes the file management program, the user interface module 228 opens an image file extraction window 10 on the liquid crystal display 214 as shown in Fig. 7. The user manipulates the operation unit 210 and enters desired conditions of an object image file, which is to be extracted, in corresponding input boxes 12 as shown in Fig. 8. Each of the input boxes 12 opens a pulldown menu, in response to the user's selection of the input box 12 by the operation unit 210. The pulldown menu in each input box 12 includes multiple options for a desired condition. The data management module 226 reads the item data from the hard disk drive 208, and the user interface module 228 displays multiple options for a desired condition in each corresponding input box 12, based on the item data. The user manipulates the operation unit 210 and selects a desired option among the multiple displayed options to enter the desired condition in the corresponding input box 12.

In the illustrated example of Fig. 8, the user requires 'the picture of the special lunch he ate too much at the favorite restaurant in the business trip in the season of early summer to autumn in 2002'. As the desired conditions of the object image file to be extracted, the user accordingly makes entries 'Early Summer to Autumn' '2002' as the time keys, 'Business Trip' as the activation key, 'Favorite Restaurant' as the situation key, 'Lunch' as the target key, and 'Eat Too Much, In Diet' as the emotion labels.

Referring to the flowchart of Fig. 6, in response to the user' instruction of image file extraction, the user interface module 228 sends the input conditions to the data management module 226 (step S202). The data management module 226 gains access to the annotation database section 232 of the hard disk drive 208 and reads all the annotation data that meet the received conditions (step S204).

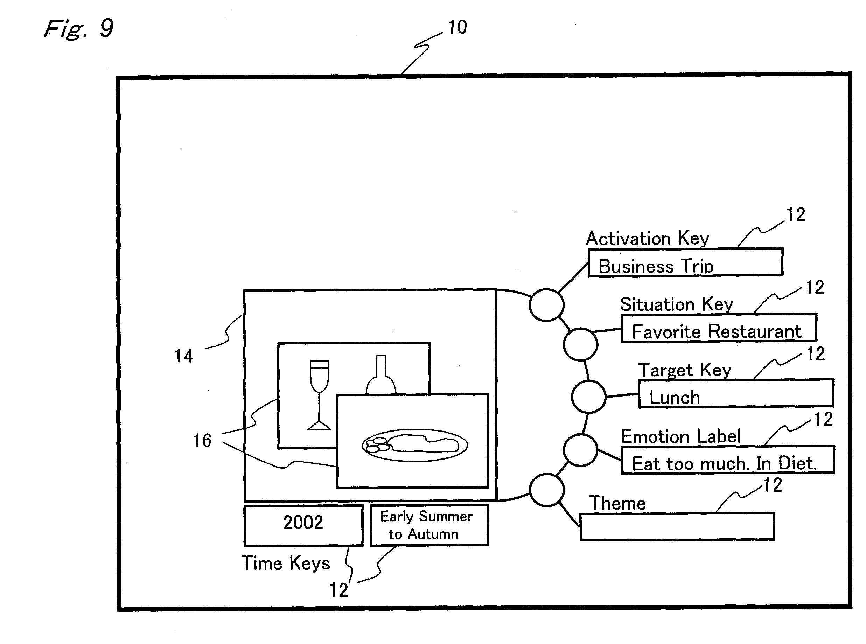

The annotation information analyzer module 224 analyzes the XML syntax of all the read-out annotation data (step S206) and gains link information to each contracted image corresponding to each of the annotation data. The data management module 226 reads the corresponding contracted images from the hard disk drive 208, based on the link information gained by the annotation information analyzer module 224. As shown in Fig. 9, the user interface module 228 displays the contracted images on an image display window 14 as images 16 corresponding to image files that meet the user's input conditions. In the illustrated example of Fig. 9, two images 16 are displayed corresponding to image files that meet the user's input conditions.

The user manipulates the operation unit 210 to select desired one of the two displayed images 16 and gives a display instruction of its original image instead of the contracted image. The annotation information analyzer module 224 gains location information, based on the result of the syntax analysis of the annotation data corresponding to the selected image. The data management module 226 obtains an object image file from a location that is identified by the location information gained by the annotation information analyzer module 224 (step S208). For example, when the identified location is within the file storage section 234 of the hard disk drive 208, the data management module 226 reads the object image file from the file storage section 234. The user interface module 228 displays an original image on the liquid crystal display 214, based on the object image file obtained by the data management module 226.

As another example, the location identified by the location information is not within the portable file management device 200 but in another device, for example, in a server on the network 400. When the portable file management device 200 is connected with the network 400 via a PC network card inserted in the portable file management device 200, the data management module 226 accesses another device like the server via the PC card I/F circuit 218 to download the object image file. The user interface module 228 displays an original image on the liquid crystal display 214, based on the downloaded object image file.

Even when an object image file is located at a remote place, for example, in a server on the network, the procedure of this embodiment can readily obtain the object image file and display the image corresponding to the object image file, based on the location information included in the annotation data.

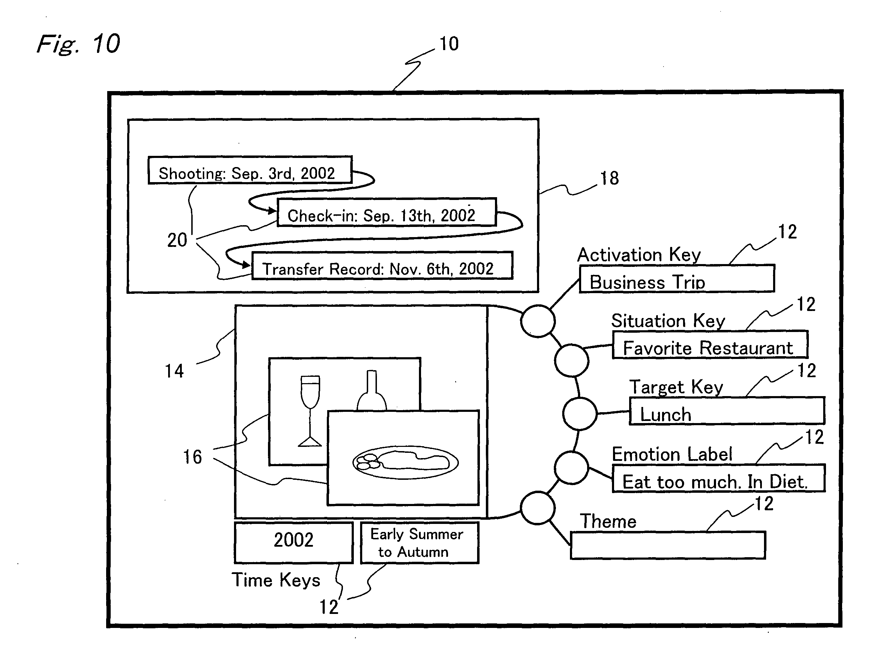

When the user selects desired one of the two images 16 shown in Fig. 9 and gives a display instruction of its record, instead of display of its original image, the annotation information analyzer module 224 gains the history information, based on the result of the syntax analysis of the annotation data corresponding to the selected image. The user interface module 228 receives the history information from the annotation information analyzer module 224 and opens a history window 18 in the image file extraction window 10 as shown in Fig. 10. The user interface module 228 displays a record 20 of operations with regard to the selected image file in the history window 18, based on the received history information. In the illustrated example of Fig. 10, the date of generation of the image file, that is, the date of shooting the corresponding image, the date of check-in of the image file, and the date of transfer of the image file are displayed as the record 20 of operations with regard to the selected image file.

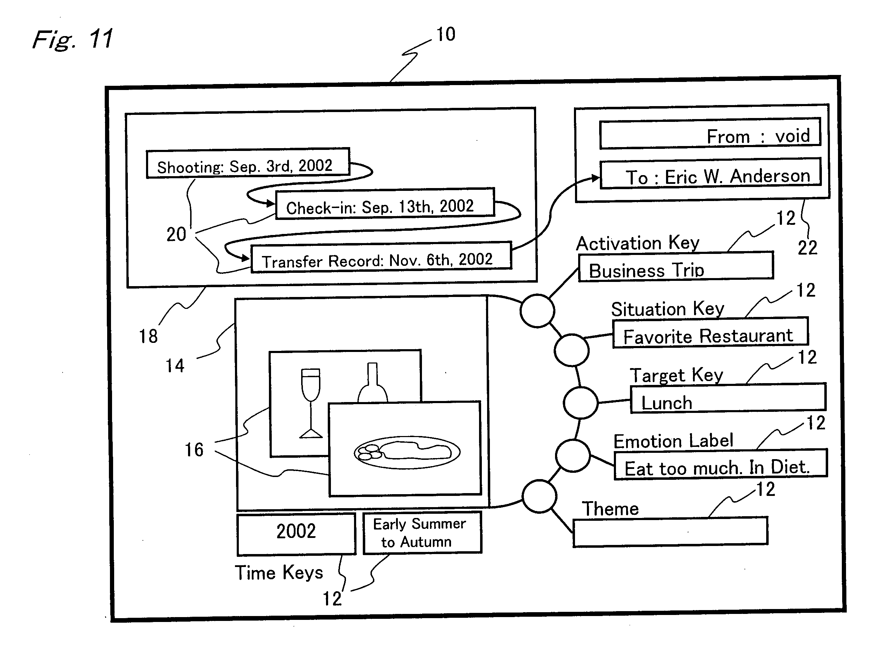

The user selects the transfer record in the displayed record 20 to give an instruction of displaying the transfer details. The user interface module 228 opens a transfer record window 22 in the image file extraction window 10 as shown in Fig. 11. The user interface module 228 shows the transfer details representing the transfer source and the transfer destination of the image file in the transfer record window 22, based on the history information received from the annotation information analyzer module 224. In the illustrated example of Fig. 11, the image file has been transferred to 'Eric W. Anderson'.

The file extraction process is also executable by the stationary file management device 100 shown in Fig. 2. The user manipulates the pointing device 112 and selects an 'Image File Extraction' option in a menu on the file management window on the monitor 114. The user interface module 128 then opens the image file extraction window 10 on the monitor 114 as shown in Fig. 7.

The user manipulates the pointing device 112 and enters desired conditions of an object image file, which is to be extracted, in corresponding input boxes 12 as shown in Fig. 8. Each of the input boxes 12 opens a pulldown menu, in response to the user's selection of the input box 12 with the pointing device 112. The pulldown menu in each input box 12 includes multiple options for a desired condition. The user manipulates the pointing device 112 and selects a desired option among the multiple options to enter the desired condition in each input box 12. The multiple options included in the pulldown menu open for each input box 12 are based on the annotation data stored in the annotation database section 132 of the hard disk drive 108.

Referring to the flowchart of Fig. 6, in response to the user' instruction of image file extraction, the user interface module 128 sends the input conditions to the data management module 126 (step S202). The data management module 126 gains access to the annotation database section 132 of the hard disk drive 108 and reads all the annotation data that meet the received conditions (step S204).

The annotation information analyzer module 124 analyzes the XML syntax of all the read-out annotation data (step S206) and gains link information to each contracted image corresponding to each of the annotation data. The data management module 126 reads the corresponding contracted images from the hard disk drive 108, based on the link information gained by the annotation information analyzer module 124. As shown in Fig. 9, the user interface module 128 displays the contracted images on the image display window 14 as the images 16 corresponding to the image files that meet the user's input conditions.

The user manipulates the pointing device 112 to select desired one of the two displayed images 16 and gives a display instruction of its original image instead of the contracted image. The annotation information analyzer module 124 gains location information, based on the result of the syntax analysis of the annotation data corresponding to the selected image. The data management module 126 obtains an object image file from a location that is identified by the location information gained by the annotation information analyzer module 124 (step S208). For example, when the identified location is within the file storage section 134 of the hard disk drive 108, the data management module 126 reads the object image file from the file storage section 134. When the identified location is not within the file management device 100 but is in another device connecting with the file management device 100 or in another device on the network 400, the data management module 126 gains access to the device via the network I/F circuit 118 or the IEEE1394 I/F circuit 120 to download the object image file.

The user interface module 128 displays an original image on the monitor 114, based on the object image file obtained by the data management module 126.

When the user selects desired one of the two images 16 shown in Fig. 9 and gives a display instruction of its record, instead of display of its original image, the annotation information analyzer module 124 gains the history information, based on the result of the syntax analysis of the annotation data corresponding to the selected image. The user interface module 128 receives the history information from the annotation information analyzer module 124 and opens the history window 18 in the image file extraction window 10 as shown in Fig. 10. The user interface module 128 displays the record 20 of operations with regard to the selected image file in the history window 18, based on the received history information.

The user selects the transfer record in the displayed record 20 to give an instruction of displaying the transfer details. The user interface module 128 opens the transfer record window 22 in the image file extraction window 10 as shown in Fig. 11. The user interface module 128 shows the transfer details representing the transfer source and the transfer destination of the image file in the transfer record window 22, based on the history information received from the annotation information analyzer module 124.

In the example described above, the object file to be extracted is an image file. The file extraction process discussed above is, however, not restricted to the image file but is also applicable to extract any other object file, for example, an audio file, a document file, or a program file, based on the annotation data corresponding to the object file.

Whether the object file to be extracted is an image file or any other file and is located in the file storage section of the hard disk drive in the file management device or at a remote place, for example, in a server on the network, the procedure of this embodiment can readily extract the object file, based on the annotation data stored in the annotation database section of the hard disk drive. The technique of this embodiment also enables display of the record of the operations with regard to the extracted object file.

### 1-B-6. Check-Out of File

As mentioned previously, a check-out process is required to exclude a file from the control object in the file management method of the embodiment. This check-out process may be carried out by the stationary file management device 100 shown in Fig. 2 and by the portable file management device 200 shown in Fig. 3. The description here regards execution of the check-out process by the portable file management device 200 shown in Fig. 3.

The user manipulates the operation unit 210 to select a desired file stored, for example, in the file storage section 234 of the hard disk drive 208 and give a check-out instruction. The user interface module 228 detects the check-out instruction and notifies the data management module 226 of the name of the selected file.

The data management module 226 gains access to the annotation database section 232 of the hard disk drive 208 and reads out the annotation data corresponding to the selected file for check-out, based on the notified file name. The annotation information analyzer module 224 analyzes the XML syntax of the annotation data and adds the date and time of check-out to the history information.

The annotation information generation module 222 then updates the annotation data with the rewritten history information and sends the updated annotation data to the data management module 226. The data management module 226 stores the updated annotation data into the annotation database section 232.

On completion of the check-out process of the selected file, the annotation data corresponding to the selected file are not erased but are left in the annotation database section 232. After the check-out, however, a record of any subsequent operations with regard to the checked-out file is not added to the remaining annotation data.

A file deletion process to delete a selected file from the control object in the file management method of the embodiment is similar to the file check-out process discussed above. In this case, the date and time of deletion is added to the annotation data, instead of the date and time of check-out.

The above description regards the check-out process executed by the portable file management device 200. This procedure is substantially applicable to check out a selected file by the stationary file management device 100.

### (2) Second Embodiment

The procedure of the first embodiment discussed above extracts an object file that meets desired conditions from a large number of files, based on annotation data corresponding to these files. The procedure of a second embodiment discussed below, on the other hand, causes information regarding an object file to be displayed according to annotation data corresponding to the object file.

The second embodiment also uses the stationary file management device 100 shown in Fig. 2 and the portable file management device 200 shown in Fig. 3 and executes the similar series of processing for generation of annotation data, move of the file, and addition of annotations to those of the first embodiment. The difference from the first embodiment is the contents of the attribute information and the history information included in the annotation data.

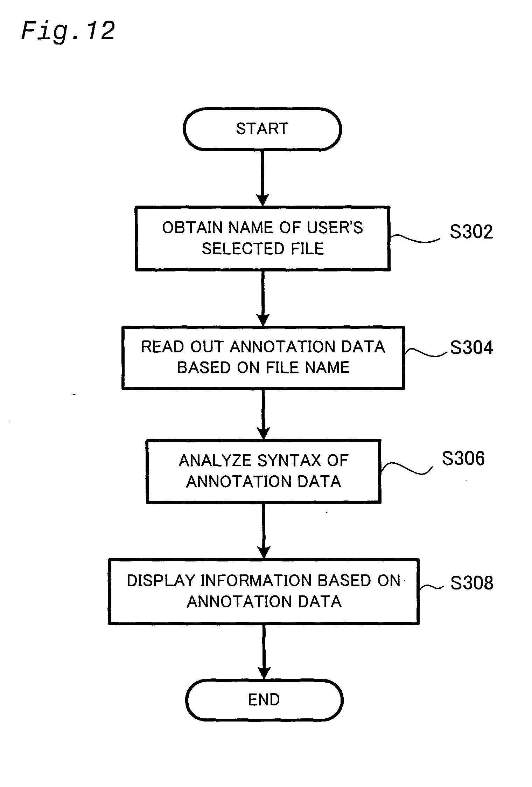

The following describes an information display process to display information regarding an object file. Fig. 12 is a flowchart showing an information display routine executed by the file management device of the second embodiment. This information display routine may be carried out by the stationary file management device 100 shown in Fig. 2 and by the portable file management device 200 shown in Fig. 3. The description here regards execution of the information display routine by the portable file management device 200 shown in Fig. 3.

When the CPU 204 executes the file management program, the user interface module 228 opens a file management window on the liquid crystal display 214. The user manipulates the operation unit 210 to select an object file for information display among a large number of files stored in the file storage section 234 of the hard disk drive 208 in the file management window and give an instruction of information display. The user interface module 228 detects the instruction of information display, obtains the name of the selected file, and notifies the data management module 226 of the file name (step S302).

The data management module 226 gains access to the annotation database section 232 of the hard disk drive 208 and reads out the annotation data corresponding to the selected file, based on the notified file name (step S304).

As an example, an image file is selected as the object file for information display.

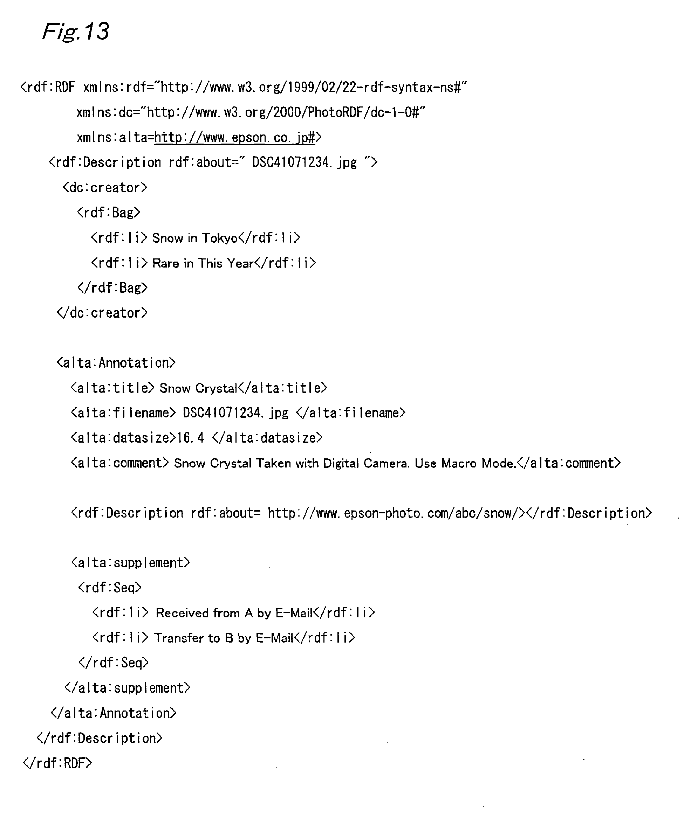

Fig. 13 shows the contents of the annotation data. As shown in Fig. 13, the annotation data also adopt XML for the means of description and RDF for the technique of description in the second embodiment.

The annotation information analyzer module 224 then analyzes the XML syntax of the annotation data read out by the data management module 226 to gain attribute information, location information, and history information (step S306).

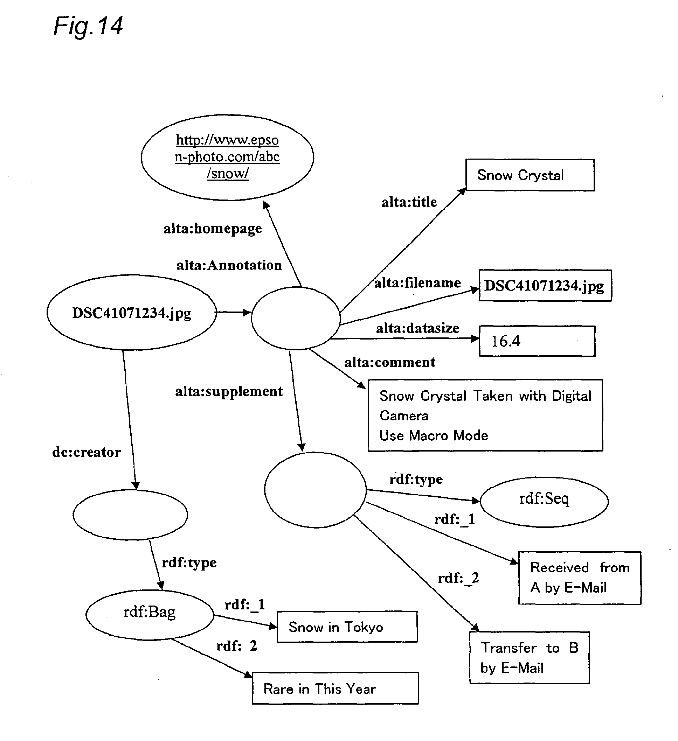

Fig. 14 shows the tree structure of the annotation data of Fig. 13 as the result of the syntax analysis. The annotation information analyzer module 224 analyzes the syntax of the annotation data with attached tags as shown in Fig. 14.

The annotation information analyzer module 224 also gains link information to a corresponding contracted image, based on the result of the syntax analysis. The data management module 226 reads the corresponding contracted image from the hard disk drive 208 according to the link information gained by the annotation information analyzer module 224.

The user interface module 228 opens an information display window on the liquid crystal display 214 (step S308). The information display window includes display of the contracted image and information on the selected image file, based on the attribute information, the location information, and the history information gained by the annotation information analyzer module 224.

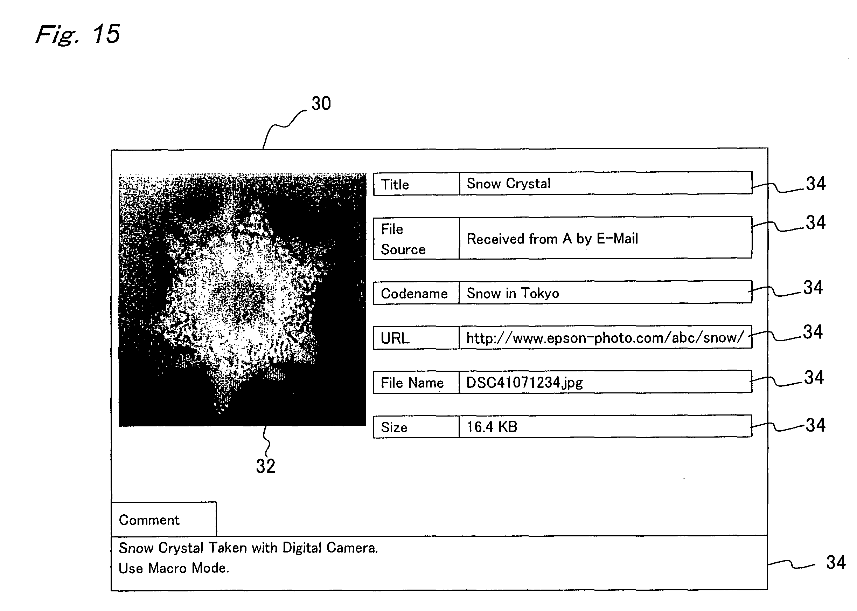

Fig. 15 shows an information display window 30, based on the annotation data of Fig. 13. As shown in Fig. 15, the information display window 30 includes display of a contracted image 32 corresponding to the selected image file and various information display boxes 34 to show the title, the codename, the file name, the size, and the comment based on the attribute information, the file source based on the history information, and the URL based on the location information. Here the comment is equivalent to the memo in the structure of the first embodiment.

As described above, the procedure of the second embodiment displays various pieces of information on the user's selected image file, as well as the contracted image corresponding to the selected image file.

In the case where the operation unit 210 is capable of entry of character strings, part of the displayed information may be changed or modified in the manner discussed below.

For example, the user manipulates the operation unit 210 to rewrite the 'Codename' information display box 34 from 'Snow in Tokyo' to 'Snow in Osaka'. The user interface module 228 notifies the annotation information analyzer module 224 of the change. The annotation information analyzer module 224 rewrites the <rdf:li> field in the annotation data shown in Fig. 13 from 'Snow in Tokyo' to 'Snow in Osaka', based on the result of the syntax analysis. The annotation information generation module 222 then updates the annotation data with the rewritten field and sends the updated annotation data to the data management module 226. The data management module 226 stores the updated annotation data into the annotation database section 232 of the hard disk drive 208. The information included in the annotation data is changed in this manner.

In the prior art system, the file name attached to an image file of a photograph taken with a digital camera is typically a sequential number of alphabets and digits, for example, 'DSC41071234.jpg'. This does not give any clue for the contents of the image. The procedure of this embodiment, however, reads out annotation data corresponding to the user's file selection, for example, by the file name, and displays information on the selected file, based on the annotation data. This arrangement enables the user to readily guess the contents of the object image file.

In the example described above, the object file for information display is an image file. The information display process discussed above is, however, not restricted to the image file but is also applicable to display information on any other object file, for example, an audio file, a document file, or a program file, based on the annotation data corresponding to the object file.

The above description regards the information display process executed by the portable file management device 200. This procedure is substantially applicable to display information on a selected file by the stationary file management device 100.

### (3) Third Embodiment

### 3-A. Structure of Device

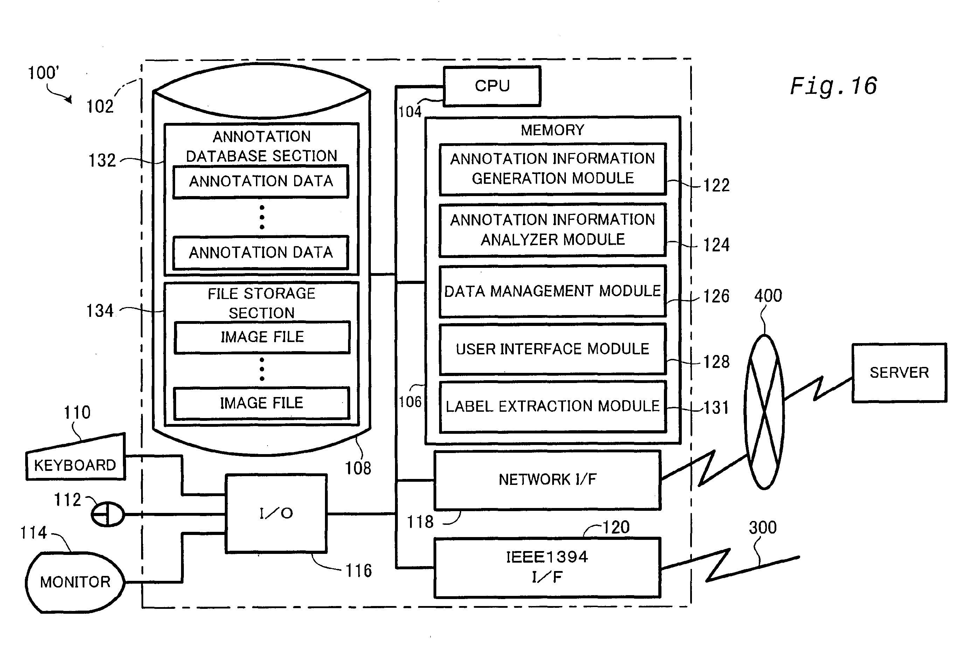

Fig. 16 is a block diagram showing a file management device 100' that is capable of executing an annotation information generation method in a third embodiment of the invention. The file management device 100' of the third embodiment shown in Fig. 16 has substantially similar structure to that of the stationary file management device 100 of the first embodiment shown in Fig. 2, except the functional blocks actualized by the CPU 104. In the structure of the third embodiment, the CPU 104 executes a file management program among the programs stored in the memory 106 to function as a label extraction module 131, as well as the annotation information generation module 122, the annotation information analyzer module 124, the data management module 126, and the user interface module 128.

The annotation information generation module 122, the data management module 126, and the label extraction module 131 of the third embodiment respectively correspond to the annotation information generation module, the image analyzing module, and the label extraction module of the invention.

The structure of the file storage section 134 constructed in the hard disk drive 108 in the third embodiment is slightly different from the structure of the file storage section 134 in the first embodiment. The file storage section 134 in the third embodiment stores a large number of image files. The image files storable in the file storage section 134 include image files of still pictures and moving pictures like JPEG (Joint Photographic Experts Group), GIF (Graphics Interchange Format), and MPEG (Moving Pictures Experts Group) files.

### 3-B. Details of Processing

The following describes various series of processing executed by the file management device of the third embodiment shown in Fig. 16. Like the first embodiment, a file is subjected to a check-in process to be included in a control object of the file management device of this embodiment shown in Fig. 16. The file is subjected to a check-out process, on the other hand, to be excluded from the control object of the file management device of the embodiment.

### 3-B-1. Generation of Annotation Data

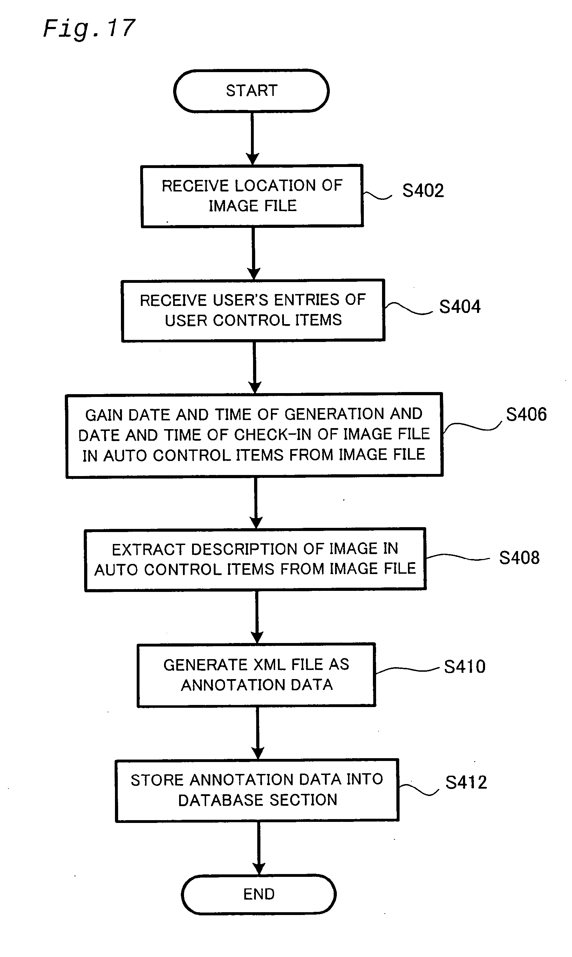

The check-in process is described first. Fig. 17 is a flowchart showing a check-in routine including the annotation information generation method of this embodiment.

When the CPU 104 executes the file management program, the user interface module 128 opens a file management window on the monitor 114. In this example, the user checks in an object image file selected among a large number of image files stored in the file storage section 134 of the hard disk drive 108. The user manipulates the pointing device 112 and drags and drops an icon corresponding to the object image file onto the file management window displayed on the monitor 114. The user interface module 128 detects the drag-and-drop and notifies the annotation information generation module 112 of a file name given to the object image file.

The annotation information generation module 122 starts generation of annotation data as annotation information on the object image file, in response to reception of the file name from the user interface module 128. The annotation data include attribute information attached to the object image file, history information of operations with regard to the object image file, and location information representing the location of the object image file and are generated as an XML file. The location information is expressed by an extension link of XML. The attribute information and the history information are classified into auto control items that are automatically gained from the object image file and user control items that require the user's entries.

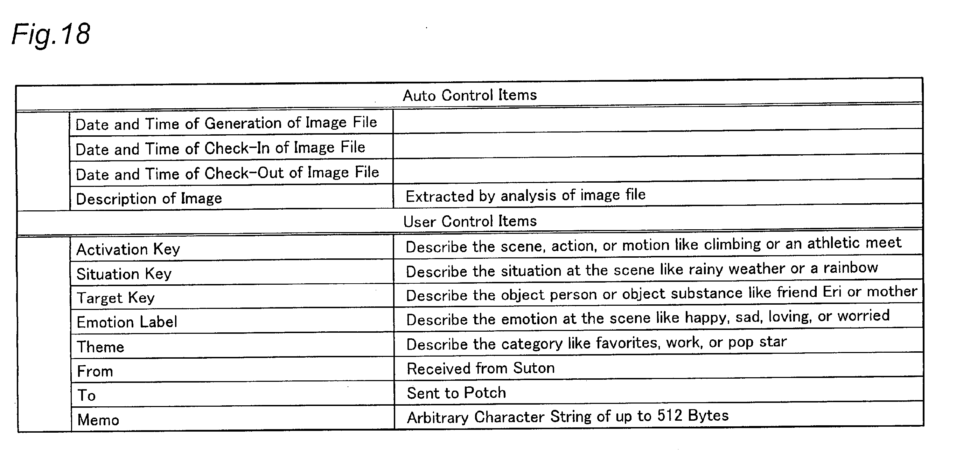

Fig. 18 shows the contents of control items in annotation data. The auto control items include the date and the time of generation of an image file, the date and the time of check-in and the date and the time of check-out of the image file, and the description of an image expressed by the image file.

Like the user control items of the first embodiment, the user control items of the third embodiment include an 'Activation' key representing a scene, action, or motion in the image, a 'Situation' key representing situation at the scene, a 'Target' key representing the name of an object person or an object substance in the image, an 'Emotion' label representing sentiment at the scene, 'Theme' representing a category of the image, 'From' representing a transfer source of the image file, 'To' representing a transfer destination of the image file, and 'Memo' freely describable by the user. The 'Memo' includes description of arbitrary character strings of up to 512 bytes.

The date and the time of generation of the image file, the date and the time of check-in and the date and the time of check-out of the image file, 'From', and 'To' are mainly used as the history information, while the other control items including the description of the image are mainly used as the attribute information.

With reference to the flowchart of Fig. 17, in order to generate such annotation data, the annotation information generation module 122 first makes an inquiry to the data management module 126 about the location of the object image file to be checked in, based on the notified file name, and receives the result of the inquiry as location information from the data management module 126 (step S402).

The user interface module 128 opens a user control items input window to ask the user to enter the user control items on the file management window displayed on the monitor 114. The user manipulates the keyboard 110 to input character strings and make desired entries of the user control items. The user interface module 128 then transfers the entries to the annotation information generation module 122. The annotation information generation module 122 sets the received entries to the corresponding user control items (step S404).

The data management module 126 reads the object image file to be checked in from the file storage section 134 of the hard disk drive 108, based on the notified file name, samples the image file, and generates a contracted image of about 120x120 pixels. The generated contracted image is written into the hard disk drive 108.

When the object image file read out by the data management module 126 is a JPEG file of, for example, a photograph, the annotation information generation module 122 obtains the date and time of shooting the photograph and the date and time of check-in from Exif (Exchangeable Image File Format) data included in the JPEG file to set the 'date and time of generation of the image file' and the 'date and time of check-in of the image file' included in the auto control items shown in Fig. 18 (step S406).

The data management module 126, in cooperation with the label extraction module 131, extracts the 'description of the image' in the auto control items of Fig. 18 from the read-out image file (step S408).

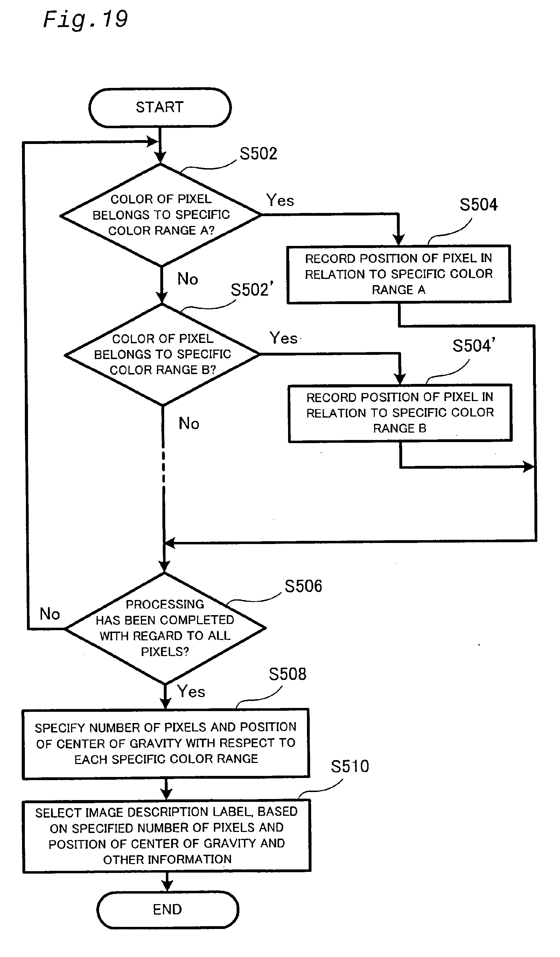

Fig. 19 is a flowchart showing a processing routine to extract the description of the image from the image file.

The data management module 126 specifies in advance multiple color ranges (for example, skin color, blue color, and red color) as specific color ranges. The label extraction module 131 sets in advance multiple image description labels (for example, human face, blue sky, and sunset glow)

The data management module 126 first determines whether the color of a certain pixel included in the image belongs to a specific color range A (step S502), in the process of sampling the image file to generate a corresponding contracted image. When the color of the certain pixel belongs to the specific color range A, the data management module 126 records the position (that is, the coordinates) of the certain pixel in relation to the specific color range A (step S504).

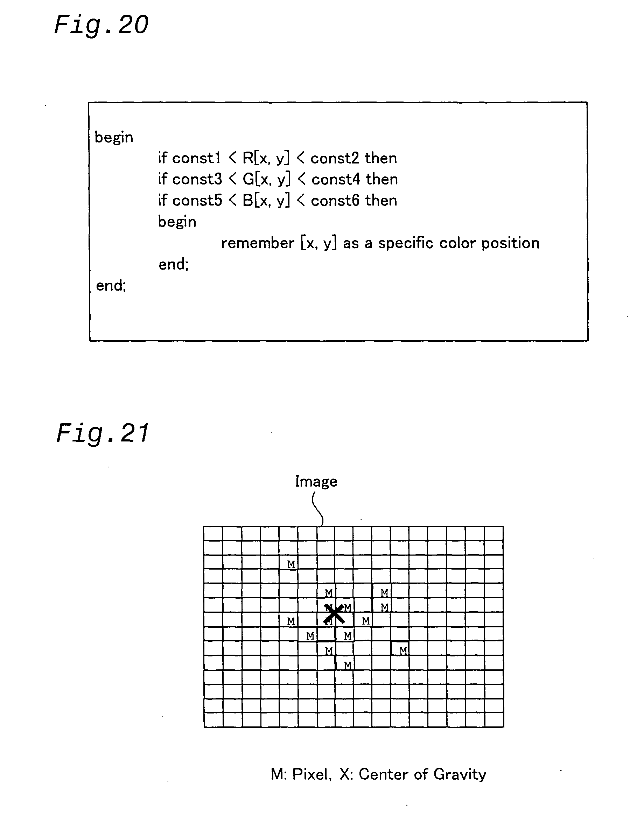

Fig. 20 shows a simulating program to determine the belongingness of the color of a pixel in a specific color range and to record the position of the pixel.

As an example, the image file read out by the data management module 126 consists of R (red), G (green), and B (blue) data, and a certain pixel at a position [x,y] in the corresponding image is subjected to the above decision. As shown in Fig. 20, when an R data value R[x,y] of the certain pixel is in a range between preset constants const1 and const2, a G data value G[x,y] is in a range between preset constants const3 and cost 4, and a B data value B[x,y] is in a range between preset constants const5 and const6, it is determined that the color of the certain pixel belongs to a specific color range defined by the preset constants. The position [x,y] of the certain pixel is then recorded in relation to the specific color range.

When it is determined at step S502 that the color of the certain pixel does not belong to the specific color range A, the data management module 126 subsequently determines whether the color of the certain pixel belongs to a next specific color range B (step S502'). When the color of the certain pixel belongs to the next specific color range B, the data management module 126 records the position of the certain pixel in relation to the next specific color range B (step S504'). In this manner, the procedure finds the specific color range each pixel belongs to and records the position of the pixel or otherwise shows that the pixel does not belong to any of the multiple specific color ranges. On completion of the processing with regard to all the pixels included in the image (step S506), the data management module 126 counts the number of pixels recorded in relation to each of the multiple specific color ranges, sets a positional distribution of the pixels in the image belonging to the specific color range as shown in Fig. 21, based on the recorded positions of the respective pixels, and determines the position of the center of gravity with regard to the pixels in the image according to the positional distribution (step S508).

Fig. 21 shows a positional distribution of pixels belonging to a certain color range and the position of their center of gravity.

After the number of pixels and the position of the center of gravity are specified with respect to each of the multiple specific color ranges, the label extraction module 131 selects a label having the high probability of meeting the description of the image among the preset multiple image description labels, based on the information regarding the specified number of pixels and position of the center of gravity and the information regarding the date and time of shooting the photograph gained previously (step S510). The selected label is extracted as the 'description of the image' in the auto control items shown in Fig. 18.

As an example, the specific color range is skin color. When the number of pixels belonging to the specific color range of skin color is greater than a preset level and the center of gravity with regard to the skin color pixels is located in the vicinity of the center of the image, the label extraction module 131 extracts a label 'human face' as the 'description of the image', among the multiple image description labels.

As another example, the specific color range is blue color. When the number of pixels belonging to the specific color range of blue color is greater than a preset level, the center of gravity with regard to the blue color pixels is located in an upper portion of the image, and the time of shooting the photograph is in the daytime (7:00 - 16:00), the label extraction module 131 extracts a label 'blue sky' as the 'description of the image', among the multiple image description labels.

As still another example, the specific color range is red color. When the number of pixels belonging to the specific color range of red color is greater than a preset level, the center of gravity with regard to the red color pixels is located in an upper portion of the image, and the time of shooting the photograph is in the evening (16:00 - 19:00), the label extraction module 131 extracts a label 'sunset glow' as the 'description of the image', among the multiple image description labels.

The label extraction module 131 sends the 'description of the image' extracted from the image file as part of the auto control items in this manner to the annotation information generation module 122.

The annotation information generation module 122 thus obtains the attribute information and the history information as the respective auto control items and user control items.

The annotation information generation module 122 then generates an XML file including the attribute information, the history information, and the location information thus obtained as annotation data (step S410). The location information is described as an URL of the image file by the extension link of XML. The location of the image file may be expressed as an absolute file path or as a relative file path. Information on link to the previously generated contracted image is also described as the location information.

The annotation information generation module 122 sends the generated annotation data to the data management module 126. The data management module 126 stores the received annotation data into the annotation database section 132 of the hard disk drive 108 (step S412). The check-in routine is then terminated.

The above example describes the check-in process with regard to an image file stored in the file storage section 134 of the hard disk drive 108. The check-in process described above is also executable with regard to an image file stored in another device connecting with the file management device 100' or an image file stored in another device, such as a server, on the network 400. The image file stored in such another device is, however, subjected to transfer, alteration, change, modification, or deletion, independently of the file management according to the file management method of the embodiment. Namely there is a fair possibility of failing in pursuit of the future record of the checked-in image file. It is accordingly desirable to download the image file from another device into the file management device of Fig. 16, prior to the check-in.

### 3-B-2. Extraction of File

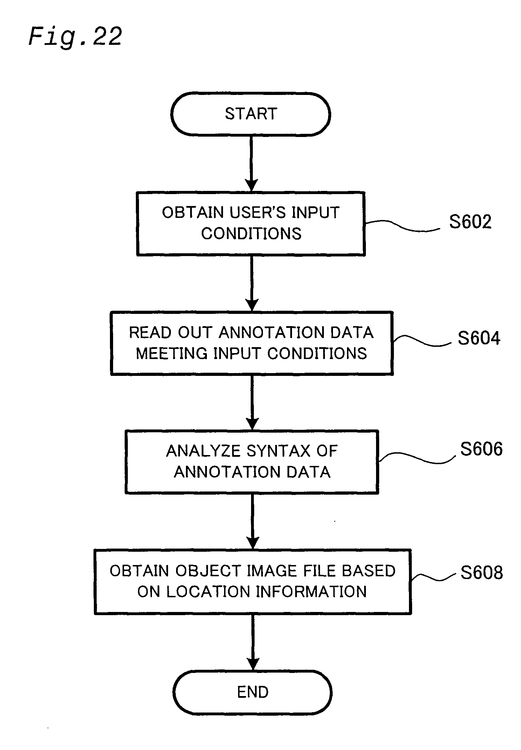

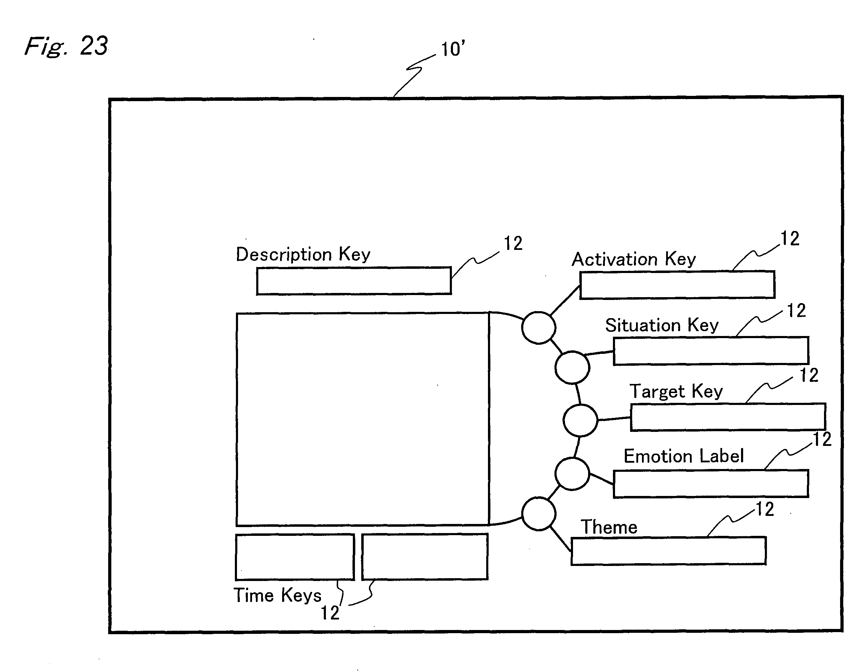

The following describes a process of extracting an image file that meets desired conditions, among a large number of checked-in image files, based on the annotation data generated as discussed above. Fig. 22 is a flowchart showing a file extraction routine to extract an image file based on the annotation data. Figs. 23 through 25 show a change in display of a window on the monitor 114 in the file extraction process of Fig. 22.

The user manipulates the pointing device 112 and selects an 'Image File Extraction' option in a menu on the file management window on the monitor 114. The user interface module 128 then opens an image file extraction window 10' on the monitor 114 as shown in Fig. 23.

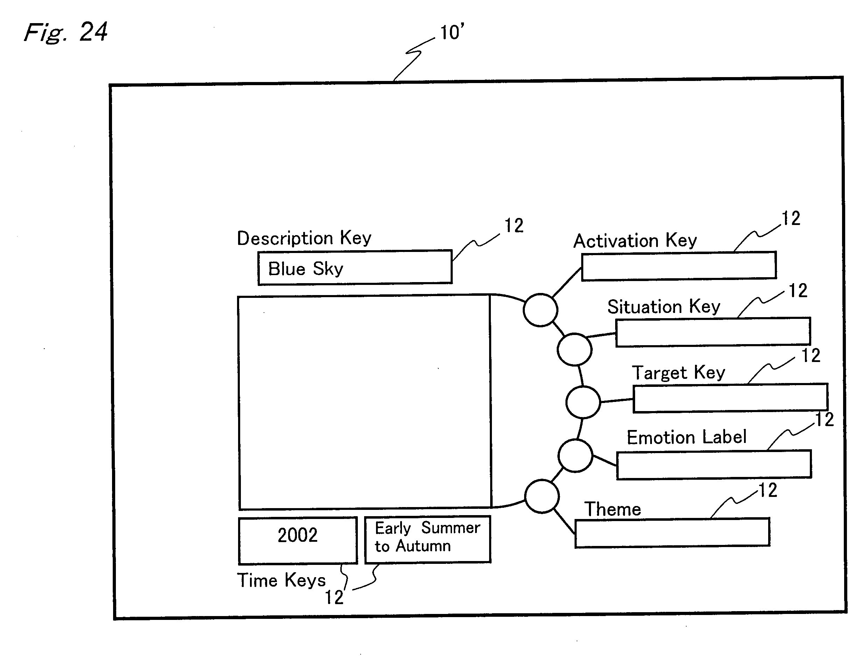

The user manipulates the pointing device 112 and enters desired conditions of an object image file, which is to be extracted, in corresponding input boxes 12 as shown in Fig. 24. Each of the input boxes 12 opens a pulldown menu, in response to the user's selection of the input box 12 with the pointing device 112. The pulldown menu in each input box 12 includes multiple options for a desired condition. The user manipulates the pointing device 112 and selects a desired option among the multiple options to enter the desired condition in each input box 12. The multiple options included in the pulldown menu open for each input box 12 are based on the annotation data stored in the annotation database section 132 of the hard disk drive 108.

In the illustrated example of Fig. 24, the user requires 'the picture of blue sky in the season of early summer to autumn in 2002'. As the desired conditions of the object image file to be extracted, the user accordingly makes entries 'Early Summer to Autumn' '2002' as the time keys and 'Blue Sky' as the description key.

Referring to the flowchart of Fig. 22, in response to the user' instruction of image file extraction, the user interface module 128 sends the input conditions to the data management module 126 (step S602). The data management module 126 gains access to the annotation database section 132 of the hard disk drive 108 and reads all the annotation data that meet the received conditions (step S604).

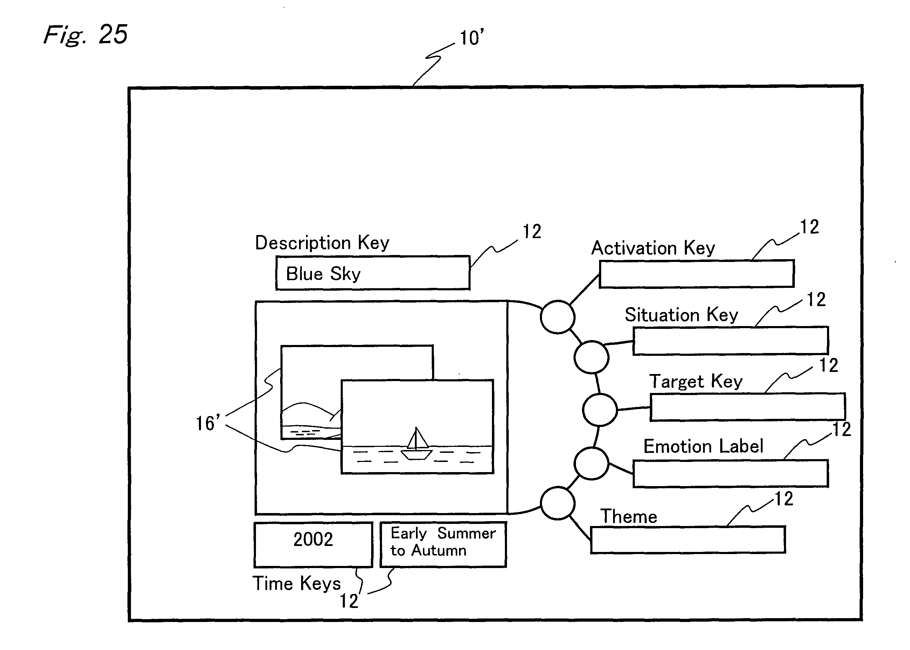

The annotation information analyzer module 124 analyzes the XML syntax of all the read-out annotation data (step S606) and gains link information to each contracted image corresponding to each of the annotation data. The data management module 126 reads the corresponding contracted images from the hard disk drive 108, based on the link information gained by the annotation information analyzer module 124. As shown in Fig. 25, the user interface module 128 displays the contracted images on an image display window as images 16' corresponding to the image files that meet the user's input conditions. In the illustrated example of Fig. 25, two images 16' are displayed corresponding to image files that meet the user's input conditions.

The user manipulates the pointing device 112 to select desired one of the two displayed images 16' and gives a display instruction of its original image instead of the contracted image. The annotation information analyzer module 124 gains location information, based on the result of the syntax analysis of the annotation data corresponding to the selected image. The data management module 126 obtains an object image file from a location that is identified by the location information gained by the annotation information analyzer module 124 (step S608). For example, when the identified location is within the file storage section 134 of the hard disk drive 108, the data management module 126 reads the object image file from the file storage section 134. When the identified location is not within the file management device 100 but is in another device connecting with the file management device 100 or in another device on the network 400, the data management module 126 gains access to the device via the network I/F circuit 118 or the IEEE1394 I/F circuit 120 to download the object image file.

The user interface module 128 displays an original image on the monitor 114, based on the object image file obtained by the data management module 126.

Even when an object image file is located at a remote place, for example, in a server on the network, the procedure of this embodiment can readily obtain the object image file and display the image corresponding to the object image file, based on the location information included in the annotation data.

As described above, the procedure of this embodiment specifies the position of the center of gravity with respect to the pixels belonging to a specific color range in the check-in process of an image file, in order to extract a characteristic of the image expressed by the image file. The procedure then selects a desired label as the description of the image among multiple image description labels, based on the position of the center of gravity obtained as the characteristic of the image and the other information. The annotation data are generated to include the description of the image as part of the attribute information.

The procedure of the third embodiment automatically gains the description of the image from the image file and does not require the user to enter the description of the image by input of character strings. This desirably relieves the load of the user.

The image file is extracted, based on the annotation data that include the description of the image as part of the attribute information. This procedure enables a desired image file to be extracted with the description of the image as the key.

### (4) Fourth Embodiment

In the structure of the third embodiment, the user manipulates the keyboard 110 to input character strings for entry of the user control items. A fourth embodiment of the invention utilizes icons, instead of input of the character strings, for entry of the user control items.

The structure and the primary operations of the file management device that is capable of executing an annotation information generation method in the fourth embodiment of the invention are similar to those of the third embodiment and are not specifically described here.

The pointing device 112, the monitor 114, the annotation information generation module 122, the user interface module 128, and the label extraction module 131 of the fourth embodiment respectively correspond to the input module, the display unit, the annotation information generation module, the display control module, and the label extraction module of the invention.

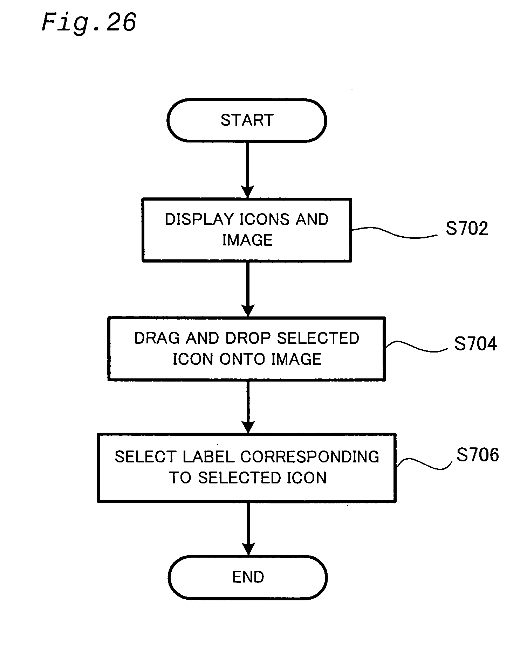

Fig. 26 is a flowchart showing a user control item input routine in the annotation information generation method in the fourth embodiment of the invention. This input routine shown in Fig. 26 replaces, for example, input of the character strings at step S404 in the flowchart of Fig. 17.

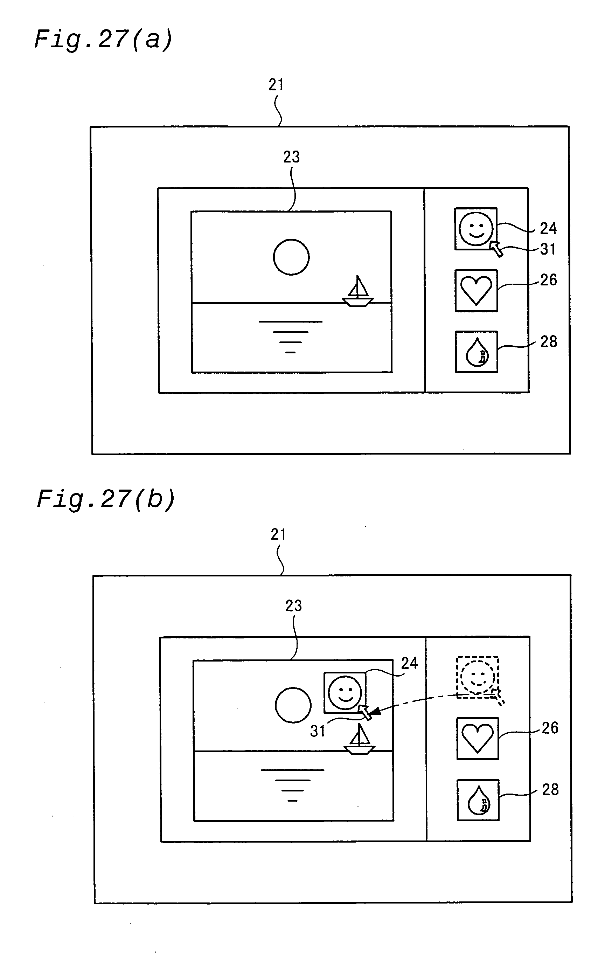

Figs. 27(a) and 27(b) show a window displayed on the monitor 114 in the user control item input process.

The user interface module 128 provides multiple icons for entry of the user control items. An identification code is assigned to each icon. The label extraction module 131 sets in advance multiple labels (for example, happy, loving, or sad) corresponding to the multiple icons.

The data management module 126 reads an object image file to be checked in, from the file storage section 134 of the hard disk drive 108. The user interface module 128 displays an image 23 expressed by the object image file in a file management window 21 open on the monitor 114 as shown in Fig. 27(a) (step S702). Simultaneously the user interface module 128 displays selected icons 24, 26, and 28 among the multiple icons provided in advance (step S702). Here the icon 24, the icon 26, and the icon 28 respectively correspond to the label 'Happy', the label 'Loving', and the label 'Sad'.

The user then manipulates the pointing device 112 and shifts a cursor 31 on the file management window 21 to drag the icon 24 in the direction of an arrow and drop the dragged icon 24 onto the image 23 as shown in Fig. 27(b) (step S704). The user interface module 128 detects the drag and drop and notifies the label extraction module 131 of the identification code assigned to the icon 24. The label extraction module 131 selects the label 'Happy' corresponding to the dragged icon 24, among the multiple labels set in advance, based on the notified identification code (step S706). The selected label is extracted, for example, as the 'Emotion Label' in the user control items shown in Fig. 18.

The label 'Happy' extracted as the 'Emotion Label' in the user control items is then sent from the label extraction module 131 to the annotation information generation module 122.

The annotation information generation module 122 sets the received label 'Happy' to one of the attribute information and generates an XML file including the attribute information, the history information, and the location information as annotation data.

Only a simple drag and drop of a selected icon on the displayed image effectuates entry of the label corresponding to the selected icon as the user control item. This arrangement does not require the user to enter the label by input of character strings, thus significantly relieving the user's load.

In the specification here, the terminology 'extraction of a file' includes retrieval of a file under preset conditions and screening of a file under preset conditions. The attribute information includes various pieces of information regarding each file, other than the history information and the location information.

### (5) Modification

The embodiments discussed above are to be considered in all aspects as illustrative and not restrictive. There may be many modifications, changes, and alterations without departing from the scope or spirit of the main characteristics of the present invention.

In the embodiments discussed above, annotation data are provided for each file. The technique of the invention is, however, not restricted to this arrangement, but annotation data may be provided for each folder that stores files. In this case, annotation data provided for a folder function as annotation information commonly applied to all the files stored in the folder.

In the structure where annotation data are provided for each folder, in response to a shift of a file from one folder to another folder, annotation data corresponding to these two folders are respectively rewritten.

Another possible modification may provide annotation data for each file and for each folder. In this modification, part or all of the annotation data corresponding to the folder may be copied to annotation data corresponding to a file stored in the folder.

In the structure where annotation data are provided for each file, as long as annotation data are generated corresponding to at least one file (representative file) among multiple files stored in a folder, generation of annotation data for the other files may be omitted. The multiple files stored in the same folder are expected to have some relation. The annotation data generated for the representative file are thus usable for the other files without the annotation data.

In the embodiments discussed above, the file management device of the invention is constructed as the personal computer or as the personal digital assistant. The technique of the invention is, however, not restricted to such construction. The file management device may be constructed by another electronic device having computer functions, for example, a digital camera, a cell phone, a game machine, a scanner, a printer, a facsimile, a complex machine, or a set-top box.

In the embodiments discussed above, annotation data are generated as an XML file described in XML. The technique of the invention is, however, not restricted to XML files but is also applicable to HTML files described in HTML (Hyper Text Markup Language), as well as to plain text files. Like XML files, HTML files and text files do not depend upon the hardware structure (for example, the CPU) or the operating system but are usable by various devices.

Command predicates described in XML may be used for function calls between the stationary file management device 100 and the portable file management device 200 or between one of these file management devices and another device. The command predicates facilitate the file extraction in the actual execution environments of various hardware structures (CPUs) and diverse operating systems.

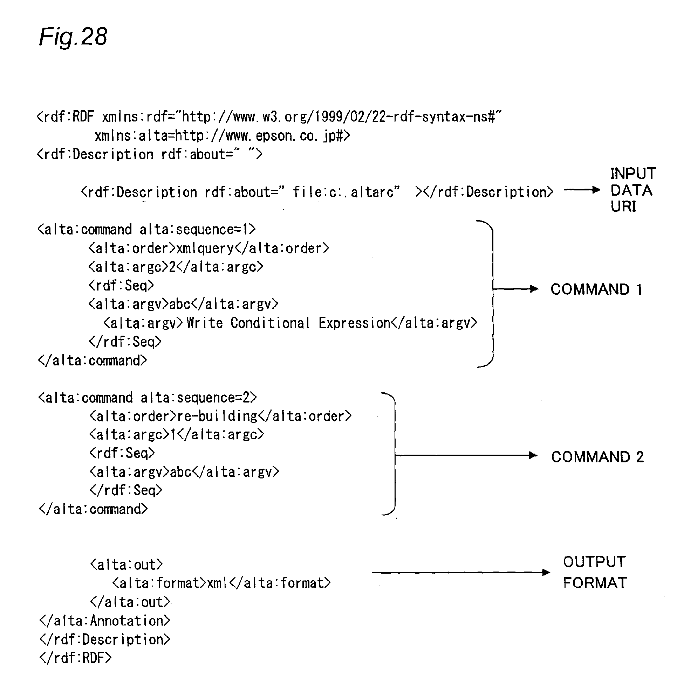

Fig. 28 shows an example of command predicates described in XML for function calls between devices. The command predicates are used when the stationary file management device 100 obtains annotation data corresponding to a desired file from the portable file management device 200, which is connected to the stationary file management device 100. The command predicates are also used when the file management device 100 or 200 obtains annotation data corresponding to a desired file from another device, which is connected with the file management device 100 or 200. Arguments required for a command are expressed as child nodes of the command element. When multiple commands are to be executed, the execution order of the multiple commands is described in sequence attribute. When Command 2 is executed on the basis of the execution result of Command 1, the conditions are added to the child nodes of the command element.

In the embodiments discussed above, the attribute information and the history information included in the generated annotation data are classified into the auto control items auto control items that are automatically gained from the file and the user control items that require the user's entries. This is, however, not restrictive at all. For example, information obtained from a sensor may be taken as attribute information and history information into annotation data. When the file management device of the invention is constructed by a digital camera equipped with a GPS (Global Positioning System) unit as a sensor, the procedure receives information on the shooting position from the GPS unit at the time of shooting (at the time of creating an image file), converts the received information into character strings, and takes the character strings as attribute information into annotation data, which is generated in the chick-in process of the image file.

In the embodiments discussed above, the annotation data are stored as text data in the form of XML files in the annotation database section. This storage form of the annotation data is, however, not restrictive. The text data may be converted into binary data and stored in the annotation database section. Storage of the annotation data as binary data in the annotation database section desirably ensures a quick access to the annotation database section. The capacity of the CPU 204 in the portable file management device 200 is naturally lower than the capacity of the CPU 104 in the stationary file management device 100. In the case of transmission of annotation data between the stationary file management device 100 and the portable file management device 200, it is thus preferable that the stationary file management device 100 takes charge of conversion of text data into binary data and conversion of binary data into text data.

In the embodiments discussed above, the use of the information on the base color included as one of the attribute information in the annotation data in the case of an image file is not specifically mentioned. In the file extraction process, an object image file may be extracted, based on the information on the base color, for example, in response to specification of 'Reddish Image' as the condition for file extraction.

In the embodiments discussed above, the use of the information on the memo included as one of the attribute information in the annotation data is not specifically mentioned. In the process of extracting a desired file based on the annotation data, when the annotation data include the information on the memo, the information on the memo may be displayed on the window of the display unit, in response to the user's display instruction of the information on the memo. In the embodiments discussed above, the information on the memo is not used as the condition for file extraction. The user can thus freely give any description in the memo. The description may be even irrespective of the contents of the file.

The third embodiment discussed above specifies the position of the center of gravity with respect to pixels belonging to a specific color range to extract the characteristic of the image expressed by the image file. This is, however, not restrictive at all, but any other suitable method may be applied to extract the characteristic of the image.

One available method utilizes orthogonal transformation, such as discrete cosine transform (DCT), Fourier transform (FFT), or wavelet transform, to convert an image file into a frequency domain and thereby extracts the sharpness of the image (whether the image is sharp or blurry) as the characteristic of the image. When the extracted sharpness is lower than a preset level, the image is expected to be blurry. A label 'Blurry Image' may thus be given as one of the attribute information included in the annotation data. Only blurry images may be collected with the label 'Blurry Image' as the key in the file extraction process.

Another method of extracting the characteristic of the image detects edges of an image according to the image file to extract the contour of the image.

In the third embodiment of the invention discussed above, the label extraction module 131 uses the image description label as the label. But the label is not restricted to the image description label but may be any label that is extractable corresponding to the extracted characteristic of the image. Similarly in the fourth embodiment of the invention, the emotion label is used as the label. This is, however, not restrictive at all and the label may be any label corresponding to an icon.

The procedure of the fourth embodiment drags and drops a selected icon onto a displayed image to effectuate association of the icon with the image. On the contrary, the procedure may drag and drop a selected image into a displayed icon to effectuate association of the image with the icon. The drag and drop is only an example, and any other suitable method may be used to relate the selected icon to the image.

In the fourth embodiment discussed above, the object file is an image file. The technique of the fourth embodiment is, however, not restricted to image files but is also applicable to other types of files including audio files, document files, and program files to utilize icons for entry of the user control item and generate annotation data. One available procedure displays icons corresponding to files and relate an icon corresponding to a desired label to an icon corresponding to a desired file.

All changes within the meaning and range of equivalency of the claims are intended to be embraced therein. The scope and spirit of the present invention are indicated by the appended claims, rather than by the foregoing description.

## Claims

1. A file management method that manages multiple files, the file management method comprising the steps of:
(a) providing annotation information corresponding to each file separately from the file with respect to each of the multiple files and/or a folder for storing the multiple files, where the annotation information includes attribute information representing an attribute attached to the file, history information representing a record of operations regarding the file, and location information representing a location of the file; and
(b) in response to specification of a condition for a file to be extracted, extracting an object file that meets the specified condition, based on the annotation information.

2. The file management method in accordance with claim 1, the file management method further comprising the step of:
(c) displaying a record of operations regarding the extracted object file, based on the history information included in the annotation information corresponding to the object file.

3. The file management method in accordance with claim 1, the file management method further comprising the step of:
(c) obtaining the object file, based on the location information included in the annotation information corresponding to the object file.

4. A file management method that manages multiple files, the file management method comprising the steps of
(a) providing annotation information corresponding to each file separately from the file with respect to each of the multiple files and/or a folder for storing the multiple files, where the annotation information includes attribute information representing an attribute attached to the file, history information representing a record of operations regarding the file, and location information representing a location of the file; and
(b) in response to specification of a file, displaying information on the specified file, based on the annotation information corresponding to the specified file.

5. The file management method in accordance with any one of claims 1 through 4, wherein the annotation information is managed in the form of a database.

6. The file management method in accordance with any one of claims 1 through 5, wherein the annotation information is described in XML or eXtensible Markup Language.

7. A file management device that manages multiple files, the file management device comprising:
an input module that receives an external instruction; and
an annotation information storage module that stores multiple pieces of annotation information corresponding to the multiple files, each piece of the annotation information corresponding to each file being provided separately from the file with respect to each of the multiple files and/or a folder for storing the multiple files, where the annotation information includes attribute information representing an attribute attached to the file, history information representing a record of operations regarding the file, and location information representing a location of the file;
the file management device receiving an external specification of a condition for a file to be extracted via the input module and extracting an object file that meets the specified condition, based on the annotation information stored in the annotation information storage module.

8. The file management device in accordance with claim 7, the file management device further comprising:
a display unit that displays information,
the file management device causing a record of operations regarding the extracted object file to be displayed on the display unit, based on the history information included in the annotation information corresponding to the object file.

9. The file management device in accordance with claim 7, the file management device obtaining the object file, based on the location information included in the annotation information corresponding to the object file.

10. A file management device that manages multiple files, the file management device comprising:
an input module that receives an external instruction;
a display unit that displays information; and
an annotation information storage module that stores multiple pieces of annotation information corresponding to the multiple files, each piece of the annotation information corresponding to each file being provided separately from the file with respect to each of the multiple files and/or a folder for storing the multiple files, where the annotation information includes attribute information representing an attribute attached to the file, history information representing a record of operations regarding the file, and location information representing a location of the file;
the file management device receiving an external specification of a file via the input module and causing information on the specified file to be displayed on the display unit, based on the annotation information corresponding to the specified file stored in the annotation information storage module.

11. The file management device in accordance with any one of claims 7 through 10, wherein the annotation information stored in the annotation information storage module is managed in the form of a database.

12. The file management device in accordance with any one of claims 7 through 11, wherein the annotation information is described in XML or eXtensble Markup Language.

13. A recording medium in which a computer program for managing multiple files is recorded, the computer program causing a computer to attain the function of:
generating annotation information corresponding to each file separately from the file with respect to each of the multiple files and/or a folder for storing the multiple files, where the annotation information includes attribute information representing an attribute attached to the file, history information representing a record of operations regarding the file, and location information representing a location of the file.

14. A recording medium in which a computer program for managing multiple files is recorded, in the case where annotation information corresponding to each file is provided separately from the file in a computer with respect to each of the multiple files and/or a folder for storing the multiple files, where the annotation information includes attribute information representing an attribute attached to the file, history information representing a record of operations regarding the file, and location information representing a location of the file,
the computer program causing the computer to attain the function of:
in response to specification of a condition for a file to be extracted, extracting an object file that meets the specified condition, based on the provided annotation information.

15. A recording medium in which a computer program for managing multiple files is recorded, in the case where annotation information corresponding to each file is provided separately from the file in a computer with respect to each of the multiple files and/or a folder for storing the multiple files, where the annotation information includes attribute information representing an attribute attached to the file, history information representing a record of operations regarding the file, and location information representing a location of the file,
the computer program causing the computer to attain the function of:
in response to specification of a file, displaying information on the specified file, based on the annotation information corresponding to the specified file.

16. An annotation information generation method that generates annotation information corresponding to an image file separately from the image file, the annotation information generation method comprising the steps of:
(a) analyzing the image file to extract a characteristic of an image expressed by the image file;
(b) extracting a label relating to the characteristic, based on at least the extracted characteristic; and
(c) generating the annotation information including the extracted label.

17. An annotation information generation method that generates annotation information corresponding to an image file separately from the image file, the annotation information generation method comprising the steps of:
(a) displaying multiple icons corresponding to multiple labels set in advance and an image expressed by the image file on a window;
(b) extracting a label corresponding to a selected icon among the multiple displayed icons, in response to an instruction of relating the selected icon to the image; and
(c) generating the annotation information including the extracted label.

18. An annotation information generation device that generates annotation information corresponding to an image file separately from the image file, the annotation information generation device comprising:
an image analyzing module that analyzes the image file to extract a characteristic of an image expressed by the image file;
a label extraction module that extracts a label relating to the characteristic, based on at least the extracted characteristic; and
an annotation information generation module that generates the annotation information including the extracted label.

19. An annotation information generation device that generates annotation information corresponding to an image file separately from the image file, the annotation information generation device comprising:
an input module;
a display unit;
a display control module that displays multiple icons corresponding to multiple labels set in advance and an image expressed by the image file on a window of the display unit;
a label extraction module that extracts a label corresponding to a selected icon among the multiple displayed icons, in response to an external instruction of relating the selected icon to the image via the input module; and
an annotation information generation module that generates the annotation information including the extracted label.

20. A recording medium in which a computer program for generating annotation information corresponding to an image file separately from the image file is recorded, the computer program causing a computer to attain the functions of:
analyzing the image file to extract a characteristic of an image expressed by the image file;
extracting a label relating to the characteristic, based on at least the extracted characteristic; and
generating the annotation information including the extracted label.

21. A recording medium in which a computer program for generating annotation information corresponding to an image file separately from the image file is recorded, the computer program causing a computer to attain the functions of:
displaying multiple icons corresponding to multiple labels set in advance and an image expressed by the image file on a window;
extracting a label corresponding to a selected icon among the multiple displayed icons, in response to an instruction of relating the selected icon to the image; and
generating the annotation information including the extracted label.
